(19) Europäisches Patentamt
European Patent Office
Office européen des brevets

(11) EP 4 353 782 A1

(12) EUROPEAN PATENT APPLICATION
published in accordance with Art. 153(4) EPC

(43) Date of publication:
**17.04.2024 Bulletin 2024/16**

(21) Application number: **22820353.5**

(22) Date of filing: **10.06.2022**

(51) International Patent Classification (IPC):
***C08L 101/00*** (2006.01) ***C08K 7/02*** (2006.01)
***C08L 1/02*** (2006.01) ***C08L 1/12*** (2006.01)
***C08L 9/00*** (2006.01) ***C08L 23/00*** (2006.01)
***C08L 59/00*** (2006.01) ***C08L 77/00*** (2006.01)
***C08L 101/12*** (2006.01)

(52) Cooperative Patent Classification (CPC):
**C08K 7/02; C08L 1/02; C08L 1/12; C08L 9/00; C08L 23/00; C08L 59/00; C08L 77/00; C08L 101/00; C08L 101/12**

(86) International application number:
**PCT/JP2022/023510**

(87) International publication number:
**WO 2022/260175 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2021 JP 2021097448**
**20.04.2022 JP 2022069690**

(71) Applicant: **Asahi Kasei Kabushiki Kaisha**
**Tokyo 1000006 (JP)**

(72) Inventor: **UENO, Koichi**
**Tokyo 100-0006 (JP)**

(74) Representative: **D Young & Co LLP**
**3 Noble Street**
**London EC2V 7BQ (GB)**

(54) **RESIN COMPOSITION AND METHOD FOR PRODUCING SAME**

(57) The present invention provides: a resin composition which achieves a good balance among the mechanical characteristics, decorativeness and aesthetic appearance at high levels; and a method for producing this resin composition. One embodiment of the present invention provides: a resin composition which contains cellulose nanofibers, a resin and a liquid polymer that has a thermal decomposition initiation temperature of more than 200°C; and a method for producing this resin composition. With respect to one embodiment of the present invention, the liquid polymer contains a diene rubber. With respect to one embodiment of the present invention, the liquid polymer is composed of one or more substances that are selected from the group consisting of a polybutadiene, a butadiene-styrene copolymer, a polyisoprene and a polychloroprene.



Processed by Luminess, 75001 PARIS (FR)

## Description

FIELD

The present invention relates to a resin composition containing cellulose nanofibers and a method for its production.

BACKGROUND

Resin materials, which are light and highly workable, are widely used as materials for a variety of purposes such as automobile members, electric and electronic parts, business machine housings and precision parts, but since simple resins often provide insufficient mechanical properties and dimensional stability, it is a common practice to use such resins as composites with various fillers. The use of cellulose nanofibers (CNF) as a naturally derived filler has been considered in recent years. CNF has the advantage of excellent mechanical properties with low environmental impact, but because of its microstructure it tends to aggregate when dry and it is therefore produced as a dispersion that can exist as a stable dispersion. For example, when cellulose nanofibers are applied for various purposes, the dispersion is sometimes mixed directly with a resin, or the dispersion is sometimes dried first and then mixed with a resin either after dispersion in a dispersing medium or directly in dried form. However, since the aggregation by hydrogen bonds between cellulose molecules in cellulose nanofibers is exceedingly strong, various methods have been proposed in the prior art for inhibiting aggregation in cellulose nanofibers.

PTL 1, for example, describes a dispersion comprising (A) a surface treatment agent which is a water-soluble polymer with a number-average molecular weight of 200 to 30,000, having both a hydrophilic segment and a hydrophobic segment, (B) polyurethane and water, as a dispersion for cellulose nanofibers that allows dispersion without aggregation of the cellulose nanofibers.

[CITATION LIST]

[PATENT LITERATURE]

[PTL 1] Japanese Unexamined Patent Publication No. 2020-063408

SUMMARY

[TECHNICAL PROBLEM]

As cellulose nanofiber-containing resin compositions continue to require increasingly higher levels of properties year by year, the molded articles obtained from the resin compositions must exhibit not only excellent mechanical properties but also a decorative and aesthetic appearance with a high degree of surface smoothness, especially in recent years. The technology described in PTL 1 is intended to increase the dispersibility of cellulose nanofibers by using a dispersion comprising a specific water-soluble polymer and polyurethane, but it still falls short from the standpoint of providing a resin composition providing high levels of mechanical properties as well as decorative properties and aesthetic quality.

It is an object of one aspect of the invention to solve this problem by providing a resin composition exhibiting high levels of mechanical properties and also decorative properties and aesthetic quality, as well as a method for producing it.

[SOLUTION TO PROBLEM]

Specifically, the present disclosure encompasses the following aspects.

[1] A resin composition comprising cellulose nanofibers, a resin and a liquid polymer having a thermal decomposition initiation temperature of higher than 200°C.
[2] The resin composition according to [1] above, wherein the liquid polymer is liquid rubber.
[3] The resin composition according to [1] or [2] above, wherein the liquid polymer includes a diene rubber.
[4] The resin composition according to any one of [1] to [3] above, wherein the liquid polymer is one or more selected from the group consisting of polybutadiene, butadiene-styrene copolymer, polyisoprene and polychloroprene.
[5] The resin composition according to any one of [1] to [4] above, wherein a number-average molecular weight of the liquid polymer is 1,000 to 80,000.

[6] The resin composition according to any one of [1] to [5] above, wherein a viscosity of the liquid polymer at 25°C is 100 mPa·s to 1,000,000 mPa·s.

[7] The resin composition according to any one of [1] to [6] above, wherein the liquid polymer is a copolymer of a conjugated diene monomer and an aromatic vinyl monomer, and an amount of aromatic vinyl monomer bonded to the conjugated diene monomer is 5 mol% to 70 mol%.

[8] The resin composition according to any one of [1] to [7] above, wherein a glass transition temperature of the liquid polymer is -150°C to 25°C.

[9] The resin composition according to any one of [1] to [8] above, wherein the cellulose nanofibers are chemically modified cellulose nanofibers.

[10] The resin composition according to [9] above, wherein the chemically modified cellulose nanofibers are acylated cellulose nanofibers with a degree of acyl substitution of 0.1 to 2.0.

[11] The resin composition according to any one of [1] to [10] above, wherein a number-average fiber diameter of the cellulose nanofibers is 2 nm to 1000 nm.

[12] The resin composition according to any one of [1] to [11] above, wherein a thermal decomposition initiation temperature of the cellulose nanofibers is 250°C or higher.

[13] The resin composition according to any one of [1] to [12] above, wherein the liquid polymer is present in a form infiltrating at least a portion of the interface between the cellulose nanofibers and the resin.

[14] The resin composition according to any one of [1] to [13] above, wherein a 250°C weight loss of the resin composition is 1.5% or lower.

[15] The resin composition according to any one of [1] to [14] above, which satisfies the relationship:

$$(T1) \geq (T2)$$

for the thermal decomposition initiation temperature T1 of the liquid polymer and the thermal decomposition initiation temperature T2 of the cellulose nanofibers.

[16] The resin composition according to [15] above, wherein the difference between T1 and T2 (T1 - T2) is 5°C or more.

[17] The resin composition according to any one of [1] to [16] above, wherein the resin is a thermoplastic resin.

[18] The resin composition according to [17] above, wherein the thermoplastic resin is one or more selected from the group consisting of polyamide-based resins, polyolefin-based resins and polyacetal-based resins.

[19] The resin composition according to [17] or [18] above, which satisfies the relationship:

$$(T1) > (T3)$$

for the thermal decomposition initiation temperature T1 of the liquid polymer and temperature T3 which is either the melting point of the thermoplastic resin or the glass transition temperature + 70°C thereof.

[20] The resin composition according to [19] above, wherein the thermoplastic resin is a crystalline thermoplastic resin, and temperature T3 is the melting point of the thermoplastic resin.

[21] The resin composition according to any one of [17] to [19] above, which satisfies the relationship:

$$(T1) > (T4)$$

for the thermal decomposition initiation temperature T1 of the liquid polymer and temperature T4 which is either the melting point of the thermoplastic resin or the glass transition temperature + 100°C thereof.

[22] The resin composition according to any one of [17] to [21] above, which satisfies the relationships:

$$\eta 50/\eta Tm \geq 20,$$

and

$$1 \leq \eta r/\eta 50 \leq 1000$$

for the viscosity $\eta 50$ of the liquid polymer at 50°C, the viscosity $\eta Tm$ of the liquid polymer at the melting point of the thermoplastic resin + 20°C, and the melt viscosity $\eta r$ of the thermoplastic resin at the melting point of the thermoplastic

resin + 20°C.

[23] The resin composition according to any one of [17] to [22] above,

wherein the thermoplastic resin is a polyolefin-based resin, and
the resin composition satisfies the relationship:

$$\eta 50/\eta Tm \geq 20$$

for the viscosity η50 of the liquid polymer at 50°C and the viscosity ηTm of the liquid polymer at the melting point of the polyolefin-based resin + 20°C.

[24] The resin composition according to any one of [17] to [23] above,

wherein the thermoplastic resin is a polyolefin-based resin, and
the resin composition satisfies the relationship:

$$\eta r/\eta Tm \leq 50{,}000$$

for the melt viscosity ηr of the polyolefin-based resin at the melting point of the polyolefin-based resin + 20°C and the viscosity ηTm of the liquid polymer at the melting point of the polyolefin-based resin + 20°C.

[25] The resin composition according to any one of [17] to [22] above,

wherein the thermoplastic resin is a polyacetal-based resin, and
the resin composition satisfies the relationship:

$$\eta 50/\eta Tm \geq 20$$

for the viscosity η50 of the liquid polymer at 50°C and the viscosity ηTm of the liquid polymer at the melting point of the polyacetal-based resin + 20°C.

[26] The resin composition according to any one of [17] to [22] and [25] above,

wherein the thermoplastic resin is a polyacetal-based resin, and
the resin composition satisfies the relationship:

$$\eta r/\eta Tm \leq 100{,}000$$

for the melt viscosity ηr of the polyacetal-based resin at the melting point of the polyacetal-based resin + 20°C and the viscosity ηTm of the liquid polymer at the melting point of the polyacetal-based resin + 20°C.

[27] The resin composition according to any one of [17] to [22] above,

wherein the thermoplastic resin is a polyamide-based resin, and
the resin composition satisfies the relationship:

$$\eta 50/\eta Tm \geq 80$$

for the viscosity η50 of the liquid polymer at 50°C and the viscosity ηTm of the liquid polymer at the melting point of the polyamide-based resin + 20°C.

[28] The resin composition according to any one of [17] to [22] and [28] above,

wherein the thermoplastic resin is a polyamide-based resin, and
the resin composition satisfies the relationship:

$$\eta r/\eta Tm \leq 50{,}000$$

for the melt viscosity ηr of the polyamide-based resin at the melting point of the polyamide-based resin + 20°C and the viscosity ηTm of the liquid polymer at the melting point of the polyamide-based resin + 20°C.

[29] The resin composition according to any one of [1] to [28] above, which does not comprise a surfactant.
[30] The resin composition according to any one of [1] to [29] above, which includes a dispersion aid at 0.1 to 50 parts by mass with respect to 100 parts by mass of the liquid polymer.
[31] A method for producing a resin composition according to any one of [1] to [30] above, wherein the method includes: hot kneading a mixture comprising cellulose nanofibers, a resin and a liquid polymer.

[ADVANTAGEOUS EFFECTS OF INVENTION]

According to one aspect of the invention it is possible to provide a resin composition exhibiting high levels of mechanical properties and also decorative properties and aesthetic quality, as well as a method for producing it.

DESCRIPTION OF EMBODIMENTS

Exemplary aspects of the present invention (hereunder also referred to collectively as "the embodiment") will now be described in detail, with the understanding that they are not limitative on the invention. Unless otherwise specified, the property values mentioned throughout the present disclosure are values measured by the methods described herein under "Examples" or methods known to be equivalent to them by those skilled in the art.

<Resin composition>

The resin composition according to one aspect of the invention comprises cellulose nanofibers, a resin and a liquid polymer. According to one aspect, the liquid polymer has a thermal decomposition initiation temperature of higher than 200°C. The liquid polymer, being liquid, tends to have more satisfactory ability to reduce aggregation of cellulose nanofibers compared to a non-liquid material, while being a polymer, it tends to have more satisfactory heat resistance than a non-polymer material. Adding a liquid polymer to a resin composition comprising cellulose nanofibers and a resin is advantageous from the viewpoint of inhibiting generation of decomposition gas during the resin composition processing steps, since the liquid polymer has high ability to reduce aggregation of the cellulose nanofibers, and also contributes high heat resistance. Reducing generation of decomposition gas is advantageous for enhancing the decorative property and aesthetic quality by lowering the surface roughness of the resin composition.
The high ability to reduce aggregation of cellulose nanofibers and high heat resistance are provided by the liquid polymer because, unlike a liquid non-polymer material (such as a non-polymer surfactant), the liquid polymer does not have a low-heat-resistant structure, and instead has a hydrophobic structure that contributes to dispersion of the cellulose nanofibers in the resin.
Cellulose nanofibers are essentially hydrophilic due to their hydroxyl groups, while the properties of resins combined with cellulose nanofibers to form resin compositions vary widely depending on the type of resins selected. Satisfactorily dispersion of cellulose nanofibers in a wide range of resin types is not easy to achieve, and therefore surfactants are often included. However, surfactants tend to undergo heat degradation by heating during production of resin compositions (typically during hot kneading of cellulose nanofibers and a resin) or by heating during processing of resin compositions to form molded articles, and the products generated by such heat degradation remain in the resin compositions or molded articles, often impairing the mechanical properties or the decorative and/or aesthetic properties. The present inventors have investigated various methods for obtaining satisfactory dispersions of cellulose nanofibers in a wide variety of resins while minimizing the use of components that easily suffer heat degradation during production and processing of resin compositions. As a result it was found that if a specific polymer having a flow property at a predetermined temperature (i.e. a liquid polymer) is combined with cellulose nanofibers, it is possible to form the desired dispersion of the cellulose nanofibers, essentially without the need to use a surfactant. Since a liquid polymer tends to have more excellent thermal stability than a non-polymer surfactant, it is advantageous in that it does not adversely affect the resin composition or the mechanical properties, decorative properties and outer appearance of its molded articles, even when subjected to heating during production and processing of the resin composition.
According to a preferred aspect, the liquid polymer is present in a form infiltrating (or penetrating) at least a

portion of the interface between the cellulose nanofibers and the resin. For the purpose of the disclosure, specifying that the liquid polymer is in a form infiltrating at least a portion of the interface between the cellulose nanofibers and the resin, means that when the form is observed under a scanning electron microscope and/or transmission electron microscope, the liquid polymer is observed at interfaces between the cellulose nanofibers and resin when the cellulose nanofibers, the resin and the liquid polymer are distinguished by means such as staining. Such a liquid polymer can contribute to satisfactory dispersion of the cellulose nanofibers in the resin by intervening between the cellulose nanofibers and the resin. The liquid polymer does not need to cover the entire surfaces of the cellulose nanofibers, but preferably it does cover the entire surfaces.

Preferred examples of each of the components of the resin composition will now be explained.

<Cellulose nanofibers>

The cellulose nanofibers may be obtained from any of various cellulose fiber starting materials selected from among natural cellulose and regenerated cellulose. Natural cellulose includes wood pulp obtained from wood sources (broadleaf trees or conifers), nonwood pulp obtained from non-wood sources (cotton, bamboo, hemp, bagasse, kenaf, cotton linter, sisal and straw), and cellulose fiber aggregates obtained from sources such as animals (such as sea squirts) and algae, or produced by microbes (such as acetic acid bacteria). Regenerated cellulose for use may be regenerated cellulose fibers (such as viscose, cupra and Tencel), cellulose derivative fibers, or superfine yarn of regenerated cellulose or cellulose derivatives, obtained by electrospinning methods. These starting materials may have their fiber diameters, fiber lengths or fibrillation degrees adjusted by beating, fibrillation or micronization with mechanical force using a grinder or refiner, or they may be subjected to bleaching and refining with chemicals, or their non-cellulose contents (acid-insoluble components such as lignin, or alkali-soluble polysaccharides such as hemicellulose) may also be adjusted, as necessary.

Cellulose nanofibers are obtained by mechanical micronization of a cellulose starting material by a dry system or wet system. The micronization treatment may be carried out using a single apparatus one or more times, or a plurality of apparatuses, each one or more times.

The apparatus used for micronization is not particularly restricted and may be a high-speed rotary-type, colloid mill-type, high pressure-type, roll mill-type or ultrasonic-type apparatus, examples of which include a high-pressure or ultrahigh-pressure homogenizer, refiner, beater, PFI mill, kneader, disperser, high-speed defibrator, grinder (stone mill crusher), ball mill, vibrating mill, bead mill, conical refiner, disc-type refiner, single-screw, twin-screw or multi screw kneader/extruder, high-speed rotating homomixer, refiner, defibrator, beater, friction grinder, high shear fibrillator (such as a cavitron rotor/starter apparatus), disperger or homogenizer (such as a microfluidizer), as types that cause metal or blades to act on the pulp fibers around a central rotation axis, or that are based on abrasion between the pulp fibers.

According to one aspect, the cellulose nanofibers may be obtained as a slurry. The slurry can be prepared by micronization after dispersion of the cellulose fiber starting material in water and/or another medium (such as an organic solvent, inorganic acid, base and/or ionic liquid).

Organic solvents to be used for micronization treatment are not particularly restricted, and examples include alcohols of 1 to 20 carbon atoms and preferably 1 to 4 carbon atoms, such as methanol, ethanol and propanol; glycol ethers of 2 to 20 carbon atoms and preferably 2 to 6 carbon atoms, such as methylcellosolve and propyleneglycol monomethyl ether; ethers of 2 to 20 carbon atoms and preferably 2 to 8 carbon atoms, such as propyleneglycol monomethyl ether, 1,2-dimethoxyethane, diisopropyl ether, tetrahydrofuran and 1,4-dioxane; ketones of 3 to 20 carbon atoms and preferably 3 to 6 carbon atoms, such as acetone, methyl ethyl ketone and methylisobutyl ketone; straight-chain or branched saturated hydrocarbons or unsaturated hydrocarbons of 1 to 20 carbon atoms and preferably 1 to 8 carbon atoms; aromatic hydrocarbons such as benzene and toluene; halogenated hydrocarbons such as methylene chloride and chloroform; carboxylic acids of 1 to 20 carbon atoms, such as formic acid, acetic acid and lactic acid; esters of 2 to 20 carbon atoms and preferably 2 to 6 carbon atoms, such as ethyl acetate and vinyl acetate; nitrogen-containing solvents such as dimethylformamide, dimethylacetamide and N-methylpyrrolidone; and sulfur-containing solvents such as dimethyl sulfoxide. These may be used alone or in mixtures of two or more, but from the viewpoint of operability in the micronization treatment, alcohols of 1 to 6 carbon atoms, glycol ethers of 2 to 6 carbon atoms, ethers of 2 to 8 carbon atoms, ketones of 3 to 6 carbon atoms, lower alkyl ethers of 2 to 5 carbon atoms, carboxylic acids of 1 to 8 carbon atoms, esters of 2 to 6 carbon atoms, dimethylformamide, dimethylacetamide, N-methylpyrrolidone and dimethyl sulfoxide are preferred.

Examples of inorganic acids include hydrochloric acid, sulfuric acid, phosphoric acid, nitric acid and boric acid, with one or more selected from the group consisting of hydrochloric acid, sulfuric acid and phosphoric acid being preferred from the viewpoint of defibration efficiency and handleability.

Examples of bases include hydroxides such as sodium hydroxide, potassium hydroxide and calcium hydroxide, carbonates such as sodium carbonate, potassium carbonate and calcium carbonate, and organic amines such as ammonia, triethylamine and triethanolamine, with one or more selected from the group consisting of hydroxides, carbonates

and organic amines being preferred from the viewpoint of defibration efficiency and handleability.

The term "ionic liquid" as used herein refers to a liquid salt comprising an organic ion for either or both the cationic portion and anionic portion, with the melting point of the ions being 100°C or lower. The cationic portion of the ionic liquid is preferably one or more cations selected from the group consisting of imidazolium cation, pyrrolidinium cation, piperidinium cation, morpholinium cation, pyridinium cation, quaternary ammonium cation and phosphonium cation.

More preferred among these are ionic liquids having an imidazolium backbone, such as imidazolium-based ionic liquids represented by the following formula (1):

[Chemical Formula 1]

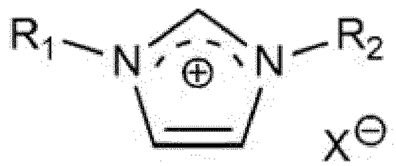

(I)

(where $R_1$ and $R_2$ each independently represent an alkyl or allyl group of 1 to 8 carbon atoms, and X represents an anion)

because they have lower melting points than other ionic liquids, and thus have a wider temperature range in which they can exist as liquids, exhibit flow properties at low temperatures, and have excellent thermal stability. The numbers of carbon atoms of $R_1$ and $R_2$ are each preferably 4 or less, more preferably 3 or less and most preferably 2 or less from the viewpoint of defibration.

The anion component is preferably a halide ion (such as $Cl^-$, $Br^-$ or $I^-$), a carboxylate anion (for example, a carboxylate ion of 1 to 3 carbon atoms such as $C_2H_5CO_2^-$, $CH_3CO_2^-$ or $HCO_2^-$), a pseudohalide ion (a monovalent ion having properties similar to a halide ion, such as $CN^-$, $SCN^-$, $OCN^-$, $ONC^-$ or $N_3^-$), a sulfonate anion, an organic sulfonate anion (such as methanesulfonate anion), a phosphate anion (such as ethylphosphate anion, methylphosphate anion or hexafluorophosphate anion), a borate anion (such as tetrafluoroborate anion) or a perchlorate anion, with halide ions and carboxylate anions being preferred from the viewpoint of defibration.

Imidazolium-based ionic liquids include 1-ethyl-3-methylimidazolium acetate, 1-ethyl-3-methylimidazolium formate, 1-allyl-3-methylimidazolium chloride, 1-allyl-3-methylimidazolium bromide, 1-ethyl-3-methylimidazoliumdimethyl phosphate, 1-butyl-3-methylimidazolium acetate, 1-butyl-3-methylimidazolium chloride, 1-butyl-3-methylimidazolium bromide, 1-ethyl-3-methylimidazoliumdiethyl phosphate, 1,3-dimethylimidazolium acetate, 1-ethyl-3-methylimidazolium propionate, 1-propyl-3-methylimidazolium chloride and 1-propyl-3-methylimidazolium bromide.

Although a cellulose fiber starting material can be defibrated with an ionic liquid alone, if the dissolving power for cellulose is too strong such that the cellulose nanofibers can potentially dissolve, it is preferred to add water and/or an organic solvent to the ionic liquid before its use. The type of organic solvent added may be selected as appropriate in consideration of compatibility with the ionic liquid, affinity with cellulose, solubility of the mixed solvent for the cellulose fiber material and viscosity, but it is preferably one or more selected from the group consisting of N,N-dimethylacetamide, N,N-dimethylformamide, 1-methyl-2-pyrrolidone, dimethyl sulfoxide, acetonitrile, methanol and ethanol.

The total amount of water and/or other medium used for micronization treatment may be an effective amount to allow dispersion of the cellulose fiber starting material, and while it is not particularly restricted it is preferably 1 mass equivalent or greater, more preferably 10 mass equivalents or greater and even more preferably 50 mass equivalents or greater, and 10,000 mass equivalents or less, more preferably 5000 mass equivalents or less, even more preferably 2000 mass equivalents or less and most preferably 1000 mass equivalents or less, with respect to the cellulose fiber starting material.

The cellulose fiber starting material contains alkali-soluble components and sulfuric acid-insoluble components (such as lignin), and therefore the alkali-soluble components and sulfuric acid-insoluble components may be reduced by carrying out refining steps such as delignification by digestion processing, and bleaching steps. However, since refining steps such as delignification by digestion processing, and bleaching steps, also cut the molecular chains of cellulose, altering its weight-average molecular weight and number-average molecular weight, it is preferred for the refining steps and bleaching steps for the cellulose fiber starting material to be controlled so that the weight-average molecular weight and the weight-average molecular weight/number-average molecular weight ratio of the cellulose nanofibers do not deviate from the proper ranges.

One issue of concern is that refining steps such as delignification by digestion processing and bleaching steps may lower the molecular weight of the cellulose nanofibers and lead to degeneration of the cellulose fiber starting material,

thus increasing the abundance ratio of the alkali-soluble portion. Since the alkali-soluble portion has poor heat resistance, refining and bleaching of the cellulose fiber starting material is preferably controlled so that the amount of alkali-soluble components in the cellulose fiber starting material is less than a certain value.

According to one aspect, the cellulose fiber starting material may be chemically modified, and the cellulose fiber starting material used may be an inorganic ester compound such as a nitric acid ester, sulfuric acid ester, phosphoric acid ester, silicic acid ester or boric acid ester, an acetylated or propionylated organic ester compound, an etherified compound such as a methyl ether, hydroxyethyl ether, hydroxypropyl ether, hydroxybutyl ether, carboxymethyl ether or cyanoethyl ether, or a TEMPO oxidation product obtained by oxidation of the primary hydroxyl of cellulose.

[Number-average fiber diameter and LID ratio]

According to one aspect, the number-average fiber diameters of the cellulose nanofibers are preferably 2 to 1000 nm from the viewpoint of obtaining a satisfactory improving effect on the physical properties by the cellulose nanofibers. The number-average fiber diameter of the cellulose nanofibers is more preferably 4 nm or greater, 5 nm or greater, 10 nm or greater, 15 nm or greater or 20 nm or greater, and more preferably 900 nm or smaller, 800 nm or smaller, 700 nm or smaller, 600 nm or smaller, 500 nm or smaller, 400 nm or smaller, 300 nm or smaller or 200 nm or smaller.

The number-average fiber length (L)/number-average fiber diameter (D) ratio of the cellulose nanofibers is preferably 30 or greater, 50 or greater, 80 or greater, 100 or greater, 120 or greater or 150 or greater, from the viewpoint of satisfactorily improving the mechanical properties of the resin composition containing the cellulose nanofibers, using a small amount of cellulose nanofibers. The upper limit is not particularly restricted but is preferably 5000 or lower, 3000 or lower, 2000 or lower or 1000 or lower, from the viewpoint of handleability.

According to one aspect, the LID ratio of the number-average fiber diameter (D) and the number-average fiber length (L) of the cellulose nanofibers of the disclosure are the values measured using a scanning electron microscope (SEM), by the following procedure. The aqueous dispersion of cellulose fibers is exchanged with tert-butanol, diluted to 0.001 to 0.1 mass%, and dispersed using a high-shear homogenizer (such as an "ULTRA-TURRAX T18", trade name of IKA Corp.) with treatment conditions of 15,000 rpm × 3 min, cast onto an osmium-vapor deposited silicon substrate and air-dried, and then dried for use as a measuring sample and measured with a high-resolution scanning electron microscope (SEM). Specifically, with the observation field adjusted to a magnification allowing observation of at least 100 fibers, the lengths (L) and diameters (D) of 100 randomly selected fibers are measured and the ratio (L/D) is calculated. The number-average value for the length (L), the number-average value for the diameter (D) and the number-average value for the ratio (L/D) is calculated for the cellulose fiber.

[BET specific surface area]

According to one aspect, the BET specific surface area of the cellulose nanofibers is preferably 1 $m^2$/g or greater, 3 $m^2$/g or greater, 5 $m^2$/g or greater, 8 $m^2$/g or greater, 10 $m^2$/g or greater or 12 $m^2$/g or greater, from the viewpoint of improving the dispersibility of the cellulose nanofibers in the resin composition, and preferably 50 $m^2$/g or lower, 40 $m^2$/g or lower, 30 $m^2$/g or lower, 25 $m^2$/g or lower or 20 $m^2$/g or lower, from the viewpoint of easy production of the dried body. The specific surface area is determined as the BET specific surface area ($m^2$/g), calculated using the program of a specific surface area/pore distribution measuring apparatus (Nova-4200e, by Quantachrome Instruments), after drying approximately 0.2 g of the cellulose nanofibers for 5 hours in a vacuum at 120°C and then measuring the nitrogen gas adsorption at the boiling point of liquid nitrogen at five points (multipoint method) in a relative vapor pressure ($P/P_0$) range of 0.05 to 0.2.

[Degree of crystallinity]

The degree of crystallinity of the cellulose nanofibers is preferably 55% or greater. If the degree of crystallinity is within this range, the mechanical properties (strength and dimensional stability) of the cellulose itself will be high, so that when the cellulose nanofibers are dispersed in a resin, the strength and dimensional stability of the resin composition will also tend to be high. A more preferred lower limit for the degree of crystallinity is 60%, preferably 70% and most preferably 80%. The upper limit for the degree of crystallinity of the cellulose nanofibers is not particularly restricted, with a higher degree being preferred, but from the viewpoint of productivity the preferred upper limit is 99%.

When the cellulose is type I cellulose crystals (derived from natural cellulose), the degree of crystallinity referred to here is that determined by the following formula, from the diffraction pattern (20/deg. = 10 to 30) obtained by measurement of the sample by wide-angle X-ray diffraction, based on the Segal method.

$$\text{Degree of crystallinity (\%)} = [I_{(200)} - I_{(amorphous)}]/I_{(200)} \times 100$$

$I_{(200)}$: Diffraction peak intensity at 200 plane (2θ = 22.5°) for type I cellulose crystal
$I_{(amorphous)}$: Amorphous halo peak intensity for type I cellulose crystal, peak intensity at angle of 4.5° lower than diffraction angle at 200 plane (2θ = 18.0°).

When the cellulose is type II cellulose crystals (derived from regenerated cellulose), the degree of crystallinity is determined by the following formula, from the absolute peak intensity h0 at 2θ = 12.6° attributed to the (110) plane peak of the type II cellulose crystal, and the peak intensity h1 from the baseline for the plane spacing, in wide-angle X-ray diffraction.

$$\text{Degree of crystallinity (\%)} = h1/h0 \times 100$$

[Polymorphic crystals]

The known crystal polymorphisms of cellulose include type I, type II, type III and type IV, among which type I and type II are most commonly used, whereas type III and type IV are not commonly used on an industrial scale but have been obtained on a laboratory scale. The cellulose nanofibers of the disclosure are preferably cellulose nanofibers containing type I cellulose crystals or type II cellulose crystals, for relatively high mobility in terms of structure and to obtain a resin composition with a lower coefficient of linear expansion and more excellent strength and elongation when subjected to stretching or bending deformation, by dispersion of the cellulose nanofibers in the resin, and more preferably the cellulose nanofibers contain type I cellulose crystals and have a degree of crystallinity of 55% or higher.

[Polymerization degree]

The degree of polymerization of the cellulose nanofibers is preferably 100 or greater, more preferably 150 or greater, even more preferably 200 or greater, yet more preferably 300 or greater, even yet more preferably 400 or greater, and most preferably 450 or greater, and preferably 3500 or lower, more preferably 3300 or lower, even more preferably 3200 or lower, yet more preferably 3100 or lower and most preferably 3000 or lower.
The degree of polymerization of the cellulose nanofibers is preferably within this range from the viewpoint of workability and mechanical properties. The degree of polymerization is preferably not too high from the viewpoint of workability, and it is preferably not too low from the viewpoint of exhibiting mechanical properties.
The degree of polymerization of the cellulose nanofibers is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".
In some cases an accurate calculation of the polymerization degree of the chemically modified cellulose nanofibers cannot be made due to the presence of the chemically modified groups. For such cases the polymerization degree of the cellulose nanofibers immediately before chemical modification, as the starting material for the chemically modified cellulose nanofibers, or of the cellulose fiber starting material immediately before chemical modification, may be considered to be the polymerization degree of the chemically modified cellulose nanofibers.

[Mw, Mn and Mw/Mn]

According to one aspect, the weight-average molecular weight (Mw) of the cellulose nanofibers is 100,000 or higher or 200,000 or higher. According to another aspect, the ratio (Mw/Mn) of the weight-average molecular weight and number-average molecular weight (Mn) is preferably 6 or lower or 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, it is not sufficient for the cellulose molecules of the cellulose nanofibers to merely have high weight-average molecular weight, but when a high weight-average molecular weight is combined with a more narrow width of the molecular weight distribution, it is possible to obtain cellulose nanofibers with especially high heat resistance. The weight-average molecular weight (Mw) of the cellulose nanofibers may be 600,000 or lower, or 500,000 or lower, for example, from the viewpoint of greater availability of the cellulose fiber starting material. The ratio (Mw/Mn) of the weight-average molecular weight and number-average molecular weight (Mn) may be 1.5 or greater or 2 or greater, for example, from the viewpoint of easier production of the cellulose nanofibers. The Mw can be controlled to within this

range by selecting a cellulose fiber starting material having the corresponding Mw, or by carrying out appropriate physical treatment and/or chemical treatment of the cellulose fiber starting material. The Mw/Mn ratio can also be controlled to within this range by selecting a cellulose fiber starting material having the corresponding Mw/Mn ratio, or by carrying out appropriate physical treatment and/or chemical treatment of the cellulose fiber starting material. The Mw and Mw/Mn of the cellulose fiber starting material may be in the ranges specified above according to one aspect. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, high-pressure homogenizer or ultrasonic device, for example, while examples of chemical treatment include digestion, bleaching, acid treatment, enzymatic treatment and regenerated cellulose treatment.

In some cases an accurate calculation of the Mw, Mn and Mw/Mn of the chemically modified cellulose nanofibers cannot be made due to the presence of the chemically modified groups. For such cases the Mw, Mn and Mw/Mn of the cellulose nanofibers immediately before chemical modification, as the starting material for the chemically modified cellulose nanofibers, or of the cellulose fiber starting material immediately before chemical modification, may be considered to be the Mw, Mn and Mw/Mn of the chemically modified cellulose nanofibers.

The weight-average molecular weight and number-average molecular weight of the cellulose nanofibers referred to here are the values determined after dissolving the cellulose nanofibers in lithium chloride-added N,N-dimethylacetamide, and then performing gel permeation chromatography with N,N-dimethylacetamide as the solvent.

[Control of polymerization degree and molecular weight

The method of controlling the degree of polymerization (i.e. mean polymerization degree) or molecular weight of the cellulose nanofibers may be hydrolysis. Hydrolysis promotes depolymerization of amorphous cellulose inside the cellulose nanofibers and lowers the mean polymerization degree. Simultaneously, hydrolysis also results in removal of impurities such as hemicellulose and lignin in addition to the aforementioned amorphous cellulose, so that the interior of the fiber material becomes porous.

The method of hydrolysis is not particularly restricted and may be acid hydrolysis, alkali hydrolysis, hot water decomposition, steam explosion, microwave decomposition or the like. Such methods may be used alone or in combinations of two or more. In a method of acid hydrolysis, for example, the cellulose fiber starting material is $\alpha$-cellulose obtained as pulp from a fibrous plant, which is dispersed in an aqueous medium, and then a suitable amount of a proton acid, carboxylic acid, Lewis acid, heteropolyacid or the like is added to the dispersion, and the mixture is heated while stirring, thereby allowing easy control of the mean polymerization degree. The reaction conditions such as temperature, pressure and time will differ depending on the type of cellulose, the cellulose concentration, the acid type and the acid concentration, and they are appropriately adjusted so as to obtain the desired mean polymerization degree. For example, a water-soluble mineral acid solution at up to 2 mass% may be used for treatment of cellulose nanofibers for 10 minutes or longer under conditions of 100°C or higher under pressure. Under such conditions, the catalyst component, such as an acid, penetrates to the cellulose nanofiber interiors and hydrolysis is promoted, allowing a lower amount of catalyst component usage and easier subsequent refining. During hydrolysis, the dispersion of the cellulose fiber starting material may contain, in addition to water, also a small amount of an organic solvent in a range that does not interfere with the effect of the invention.

[Alkali-soluble polysaccharide and acid-insoluble component]

The alkali-soluble polysaccharides such as hemicellulose and acid-insoluble components such as lignin are present between cellulose nanofiber microfibrils and between microfibril bundles. Hemicellulose is a polysaccharide composed of sugars such as mannan and xylan, and it plays a role in hydrogen bonding with cellulose and binding together microfibrils. Lignin is a compound with an aromatic ring that is known to participate in covalent bonding with hemicellulose in plant cell walls.

Alkali-soluble polysaccharides in the cellulose nanofibers include $\beta$-cellulose and $\gamma$-cellulose, in addition to hemicellulose. Alkali-soluble polysaccharides are understood by those skilled in the art to consist of the components that are obtained as the alkali-soluble portion of holocellulose (that is, the components other than $\alpha$-cellulose in the holocellulose), upon solvent extraction and chlorine treatment of a plant (such as wood). Since alkali-soluble polysaccharides consist of hydroxyl group-containing polysaccharides with poor heat resistance, which can lead to inconveniences such as decomposition when subjected to heat, yellowing due to heat aging and reduced strength of the cellulose nanofibers, it is preferred to have a lower alkali-soluble polysaccharide content in the cellulose nanofibers.

According to one aspect, the average content of alkali-soluble polysaccharides in the cellulose nanofibers is preferably 20 mass% or lower, 18 mass% or lower, 15 mass% or lower or 12 mass% or lower with respect to 100 mass% of the cellulose nanofibers, from the viewpoint of maintaining mechanical strength and inhibiting yellowing of the cellulose

nanofibers during melt kneading. The content may also be 0.1 mass% or greater, 0.5 mass% or greater, 1 mass% or greater, 2 mass% or greater or 3 mass% or greater from the viewpoint of facilitating production of the cellulose nanofibers.

The average content of alkali-soluble polysaccharides can be determined by a method described in non-patent literature (Mokushitsu Kagaku Jikken Manual, ed. The Japan Wood Research Society, pp.92-97, 2000), subtracting the $\alpha$-cellulose content from the holocellulose content (Wise method). In the technical field this method is considered to be a method of measuring hemicellulose content. The alkali-soluble polysaccharide content is calculated 3 times for each sample, and the number average for the calculated alkali-soluble polysaccharide contents is recorded as the average alkali-soluble polysaccharide content. In some cases an accurate calculation of the alkali-soluble polysaccharide content of the chemically modified cellulose nanofibers cannot be made due to the presence of the chemically modified groups. For such cases the average alkali-soluble polysaccharide content of the cellulose nanofibers immediately before chemical modification, as the starting material for the chemically modified cellulose nanofibers, or of the cellulose fiber starting material immediately before chemical modification, may be considered to be the average alkali-soluble polysaccharide content of the chemically modified cellulose nanofibers.

The acid-insoluble component present in the cellulose nanofibers will be understood by a person skilled in the art to be the insoluble component remaining after sulfuric acid treatment of the degreased sample obtained by solvent extraction of a plant (such as wood). Specifically, the acid-insoluble component may be, but is not limited to, aromatic-derived lignin. The acid-insoluble component will often itself be colored, and since this can result in inconveniences such as impairment of the outer appearance of the resin composition or yellowing during heat aging, the average content of acid-insoluble components in the cellulose nanofibers is preferably as low as possible.

According to one aspect, the average content of the acid-insoluble component in the cellulose nanofibers is preferably 10 mass% or lower, 5 mass% or lower or 3 mass% or lower with respect to 100 mass% of the cellulose nanofibers, from the viewpoint of avoiding reduction in heat resistance and resulting discoloration of the cellulose nanofibers. The content may also be 0.1 mass% or greater, 0.2 mass% or greater or 0.3 mass% or greater from the viewpoint of facilitating production of the cellulose nanofibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is considered to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component, and the average of the acid-insoluble component content calculated for three samples is recorded as the average content of the acid-insoluble component. In some cases an accurate calculation of the average content of the acid-insoluble component in the chemically modified cellulose nanofibers cannot be made due to the presence of the chemically modified groups. For such cases the average alkali-soluble polysaccharide content of the cellulose nanofibers immediately before chemical modification, as the starting material for the chemically modified cellulose nanofibers, or of the cellulose fiber starting material immediately before chemical modification, may be considered to be the average alkali-soluble polysaccharide content of the chemically modified cellulose nanofibers.

[Thermal decomposition initiation temperature ($T_D$)]

According to one aspect, the thermal decomposition initiation temperature ($T_D$) of the cellulose nanofibers is preferably 250°C or higher, 260°C or higher, 270°C or higher, 275°C or higher, 280°C or higher or 285°C or higher, from the viewpoint of avoiding heat degradation during melt kneading and allowing mechanical strength to be exhibited. While a higher thermal decomposition initiation temperature is preferred, it is also 320°C or lower, 310°C or lower or 300°C or lower, from the viewpoint of easier production of the cellulose nanofibers.

[1% weight loss temperature ($T_{1\%}$) and 250°C weight loss ($T_{250°C}$)]

According to one aspect, the 1 wt% weight loss temperature ($T_{1\%}$) of the cellulose nanofibers is preferably 260°C or higher, 270°C or higher, 275°C or higher, 280°C or higher, 285°C or higher or 290°C or higher, from the viewpoint of avoiding heat degradation during melt kneading and allowing mechanical strength to be exhibited. While a higher $T_{1\%}$ is preferred, it is also 330°C or lower, 320°C or lower or 310°C or lower, from the viewpoint of easier production of the cellulose nanofibers.

According to one aspect, the 250°C weight loss ($T_{250°C}$) of the cellulose nanofibers is preferably 15% or lower, 12% or lower, 10% or lower, 8% or lower, 6% or lower, 5% or lower, 4% or lower or 3% or lower, from the viewpoint of avoiding heat degradation during melt kneading and allowing mechanical strength to be exhibited. While a lower $T_{250°C}$ is preferred, it may be 0.1% or greater, 0.5% or greater, 0.7% or greater or 1.0% or greater, for example, from the viewpoint of easier production of the cellulose nanofibers.

For the purpose of the disclosure, the $T_D$ is the value determined from a graph of thermogravimetry (TG) analysis

under a nitrogen flow, where the abscissa is temperature and the ordinate is weight retention %. After increasing the temperature of the cellulose nanofibers from room temperature to 150°C at a temperature-elevating rate of 10°C/min under a nitrogen flow of 100 ml/min and holding this state at 150°C for 1 hour, the temperature was further increased to 450°C at a temperature-elevating rate of 10°C/min. Starting from the weight at 150°C (with essentially all of the moisture content removed) (0 wt% weight loss), a straight line is obtained running through the temperature at 1 wt% weight loss ($T_{1\%}$) and the temperature at 2 wt% weight loss ($T_{2\%}$). The temperature at the point of intersection between this straight line and a horizontal (baseline) running through the origin at weight loss 0 wt%, is defined as $T_D$.

The 1% weight loss temperature ($T_{1\%}$) is the temperature at 1 wt% weight loss with the 150°C weight as the origin, after continuous temperature increase by the method for $T_D$ described above.

The 250°C weight loss ($T_{250°C}$) of the cellulose nanofibers is the weight loss by TG analysis when the cellulose nanofibers have been stored for 2 hours at 250°C under a nitrogen flow. After increasing the temperature of the cellulose nanofibers from room temperature to 150°C at a temperature-elevating rate of 10°C/min under a nitrogen flow of 100 ml/min and holding this state at 150°C for 1 hour, the temperature was further increased from 150°C to 250°C at a temperature-elevating rate of 10°C/min, and held in that state at 250°C for 2 hours. Calculation was by the following formula using the weight WO upon reaching 250°C and the weight W1 after holding at 250°C for 2 hours.

$$250°C\ \text{Weight change rate (\%)}: (W1 - W0)/W0 \times 100$$

[Porous sheet]

Measurement of the properties of the cellulose nanofibers (degree of crystallinity, crystal polymorphism, polymerization degree, Mw, Mn and Mw/Mn, average alkali-soluble polysaccharide content, average content of acid-insoluble component, $T_D$, $T_{1\%}$ and $T_{250°C}$) may vary significantly in their numerical values, depending on the form of the measuring sample. A porous sheet without distortion was used as the measuring sample for more stable reproducibility of measurement. The method of fabricating the porous sheet was as follows.

First, a concentrated cake of cellulose nanofibers with a solid content of 10 mass% or greater is added to tert-butanol, and further subjected to dispersion treatment with a mixer until disappearance of the aggregates. The mixture is then prepared to a concentration of 0.5 mass% for 0.5 g of cellulose nanofiber solid weight. A 100 g portion of the obtained tert-butanol dispersion is filtered on filter paper. Without release from the filter paper, the filtered substance together with the filter paper is sandwiched by two larger filter paper sheets, and dried for 5 minutes in an oven at 150°C while pressing the edges of the larger filter paper with a weight from above. The filter paper is then released to obtain a porous sheet without distortion. Sheets with air permeability resistance R up to 100 sec/100 ml per 10 $g/m^2$ basis weight of the sheet were considered to be porous sheets, and were used as measuring samples.

For measurement of the air permeability resistance R, the basis weight W ($g/m^2$) of each porous sheet sample that had been left to stand for 1 day in an environment of 23°C, 50% RH is measured, and then an Oken-type air permeability resistance tester (Model EG01 by Asahi Seiko Co., Ltd.) is used to measure the air permeability resistance R (sec/100 ml). The value per 10 $g/m^2$ basis weight is calculated by the following formula.

$$\text{Air permeability resistance (sec/100 ml) per 10 } g/m^2 \text{ basis weight} = R/W \times 10$$

[Physical properties of cellulose nanofiber in resin composition]

The physical properties of the cellulose nanofibers in the resin composition (number-average fiber length, number-average fiber diameter, LID ratio, degree of crystallinity, crystal polymorphism, polymerization degree, Mw, Mn and Mw/Mn, average alkali-soluble polysaccharide content, average content of acid-insoluble component, $T_D$, $T_{1\%}$ and $T_{250°C}$, as well as the DS, DSs, DS heterogeneity ratio and coefficient of variation in the DS heterogeneity ratio, described below), are analyzed by the following methods. The resin component in the resin composition is dissolved in an organic or inorganic solvent that is able to dissolve the resin component of the resin composition, and the cellulose nanofibers are separated and thoroughly washed with a solvent, after which the solvent is replaced with tert-butanol. The tert-butanol slurry of the cellulose nanofibers is then analyzed by the same measuring methods described above, and the physical properties of the cellulose nanofibers in the resin composition are calculated.

[Chemical modification]

The cellulose nanofibers may be chemically modified cellulose nanofibers. The cellulose nanofibers may be chemically modified beforehand, at the stage of the cellulose fiber starting material, during defibration treatment or after

defibration treatment, for example, or they may be chemically modified as a dispersion, either during or after preparation of the slurry, or during or after the drying and granulation step.

The modifying agent for the cellulose nanofibers used may be a compound that reacts with the hydroxyl groups of cellulose, and it may be an esterifying agent, an etherifying agent or a silylating agent, for example. According to a preferred aspect, the chemical modification is acylation, and especially acetylation, using an esterifying agent. Preferred esterifying agents are acid halides, acid anhydrides, vinyl carboxylate esters and carboxylic acids.

An acid halide may be one or more selected from the group consisting of compounds represented by the following formula.

$R^1$-C(=O)-X

(In the formula, $R^1$ represents an alkyl group of 1 to 24 carbon atoms, an alkenyl group of 2 to 24 carbon atoms, a cycloalkyl group of 3 to 24 carbon atoms or an aryl group of 6 to 24 carbon atoms, and X is Cl, Br or I.)

Specific examples of acid halides include acetyl chloride, acetyl bromide, acetyl iodide, propionyl chloride, propionyl bromide, propionyl iodide, butyryl chloride, butyryl bromide, butyryl iodide, benzoyl chloride, benzoyl bromide and benzoyl iodide, with no limitation to these. Acid chlorides are preferably used among these from the viewpoint of reactivity and handleability. For reaction of an acid halide, one or more alkaline compounds may also be added to neutralize the acidic by-products while simultaneously exhibiting catalytic action. Specific examples of alkaline compounds include: tertiary amine compounds such as triethylamine and trimethylamine; and nitrogen-containing aromatic compounds such as pyridine and dimethylaminopyridine; with no limitation to these.

Any suitable acid anhydride may be used as an acid anhydride. Examples include:

saturated aliphatic monocarboxylic anhydrides of acetic acid, propionic acid, (iso)butyric acid and valeric acid;
unsaturated aliphatic monocarboxylic anhydrides of (meth)acrylic acid and oleic acid;
alicyclic monocarboxylic anhydrides of cyclohexanecarboxylic acid and tetrahydrobenzoic acid;
aromatic monocarboxylic anhydrides of benzoic acid and 4-methylbenzoic acid;
dibasic carboxylic anhydrides, for example: saturated aliphatic dicarboxylic acid anhydrides such as succinic anhydride and adipic anhydride, unsaturated aliphatic dicarboxylic anhydrides such as maleic anhydride and itaconic anhydride, alicyclic dicarboxylic acid anhydrides such as 1-cyclohexene-1,2-dicarboxylic anhydride, hexahydrophthalic anhydride and methyltetrahydrophthalic anhydride, and aromatic dicarboxylic anhydrides such as phthalic anhydride and naphthalic anhydride; and
tribasic or greater polybasic carboxylic anhydrides, for example: polycarboxylic acid (anhydrides) such as trimellitic anhydride and pyromellitic anhydride.

The catalyst for reaction of an acid anhydride may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Preferred vinyl carboxylate esters are vinyl carboxylate esters represented by the following formula:

R-COO-CH=$CH_2$

{where R is an alkyl group of 1 to 24 carbon atoms, an alkenyl group of 2 to 24 carbon atoms, a cycloalkyl group of 3 to 16 carbon atoms or an aryl group of 6 to 24 carbon atoms). Vinyl carboxylate esters are more preferably one or more selected from the group consisting of vinyl acetate, vinyl propionate, vinyl butyrate, vinyl caproate, vinyl cyclohexanecarboxylate, vinyl caprylate, vinyl caprate, vinyl laurate, vinyl myristate, vinyl palmitate, vinyl stearate, vinyl pivalate, vinyl octylate, divinyl adipate, vinyl methacrylate, vinyl crotonate, vinyl octylate, vinyl benzoate and vinyl cinnamate. For esterification reaction with a vinyl carboxylate ester, one or more catalysts selected from the group consisting of alkali metal hydroxides, alkaline earth metal hydroxides, alkali metal carbonates, alkaline earth metal carbonates, alkali metal hydrogencarbonate salts, primary to tertiary amines, quaternary ammonium salts, imidazoles and their derivatives, pyridines and their derivatives, and alkoxides, may be added.

Alkali metal hydroxides and alkaline earth metal hydroxides include sodium hydroxide, potassium hydroxide, lithium hydroxide, calcium hydroxide and barium hydroxide. Alkali metal carbonates, alkaline earth metal carbonates and alkali metal hydrogencarbonate salts include lithium carbonate, sodium carbonate, potassium carbonate, cesium carbonate, magnesium carbonate, calcium carbonate, barium carbonate, lithium hydrogencarbonate, sodium hydrogencarbonate, potassium hydrogencarbonate and cesium hydrogencarbonate.

Primary to tertiary amines are primary amines, secondary amines and tertiary amines, specific examples of which include ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine and triethylamine.
Imidazole and its derivatives include 1-methylimidazole, 3-aminopropylimidazole and carbonyldiimidazole.
Pyridine and its derivatives include N,N-dimethyl-4-aminopyridine and picoline.
Alkoxides include sodium methoxide, sodium ethoxide and potassium-t-butoxide.
Carboxylic acids include one or more selected from the group consisting of compounds represented by the following formula.

R-COOH

(In the formula, R represents an alkyl group of 1 to 16 carbon atoms, an alkenyl group of 2 to 16 carbon atoms, a cycloalkyl group of 3 to 16 carbon atoms or an aryl group of 6 to 16 carbon atoms.)
Specific examples of carboxylic acids include one or more selected from the group consisting of acetic acid, propionic acid, butyric acid, caproic acid, cyclohexanecarboxylic acid, caprylic acid, capric acid, lauric acid, myristic acid, palmitic acid, stearic acid, pivalic acid, methacrylic acid, crotonic acid, octylic acid, benzoic acid and cinnamic acid.
Preferred among these carboxylic acids are one or more selected from the group consisting of acetic acid, propionic acid and butyric acid, and especially acetic acid, from the viewpoint of reaction efficiency.
The catalyst for reaction of a carboxylic acid may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.
Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency.

[Acyl group degree of substitution (DS)]

When the cellulose nanofibers are chemically modified (by hydrophobizing such as acylation, for example), the dispersibility of the cellulose nanofibers in the resin will tend to be satisfactory, but in combination with a liquid polymer, the cellulose nanofibers of the disclosure can also exhibit satisfactory dispersibility in resins even when they are unsubstituted or low-substituted. When the cellulose nanofibers are esterified cellulose nanofibers, the acyl group degree of substitution (DS) is preferably 0.1 or greater, 0.2 or greater, 0.25 or greater, 0.3 or greater or 0.5 or greater, from the viewpoint of obtaining esterified cellulose nanofibers with a high thermal decomposition initiation temperature, and the acyl substitution degree is preferably 2.0 or lower, 1.8 or lower, 1.5 or lower, 1.2 or lower, 1.0 or lower, 0.8 or lower, 0.7 or lower, 0.6 or lower or 0.5 or lower, from the viewpoint of obtaining esterified cellulose nanofibers exhibiting high tensile strength and dimensional stability provided by the cellulose since unmodified cellulose backbone remains in the esterified cellulose nanofibers, as well as a high thermal decomposition initiation temperature provided by the chemical modification.
When the modifying groups on the chemically modified cellulose nanofibers are acyl groups, the acyl group degree of substitution (DS) can be calculated based on the peak intensity ratio between the acyl group-derived peak and the cellulose backbone-derived peak, in the reflective infrared absorption spectrum of the esterified cellulose nanofibers. The peak of the absorption band for C=O based on acyl groups appears at 1730 $cm^{-1}$, while the peak of the absorption band for C-O based on the cellulose backbone chain appears at 1030 $cm^{-1}$. The DS of esterified cellulose nanofibers can be calculated using a calibration curve according to:

$$\text{Degree of substitution DS} = 4.13 \times \text{IR index (1030)},$$

derived from a correlation graph drawn between DS obtained from solid NMR measurement of the esterified cellulose nanofibers described below, and the modification rate (IR index 1030), defined by the ratio of the peak intensity of the absorption band for C=O based on acyl groups with respect to the peak intensity of the absorption band for C-O of the cellulose backbone chain.
The method of determining DS of the esterified cellulose nanofibers by solid NMR may be performing $^{13}$C solid NMR measurement of the freeze-shattered esterified cellulose nanofibers, and calculating the value by the following formula using the area intensity (Inf) of the signal attributed to one carbon atom of the modifying group, with respect to

the total area intensity (Inp) of the signals attributed to C1-C6 carbons of the pyranose rings of cellulose, appearing in the range of 50 ppm to 110 ppm.

$$DS = (Inf) \times 6/(Inp)$$

For example, when the modifying group is acetyl, the signal at 23 ppm attributed to $-CH_3$ may be used.
The conditions for the $^{13}C$ solid NMR measurement may be as follows, as an example.

Apparatus: Bruker Biospin Avance 500WB
Frequency: 125.77 MHz
Measuring method: DD/MAS
Latency time: 75 sec
NMR sample tube: 4 mmφ
Number of scans: 640 (~14 hr)
MAS: 14,500 Hz
Chemical shift reference: glycine (external reference: 176.03 ppm)

The DS heterogeneity ratio (DSs/DSt), defined as the proportion of the degree of modification (DSs) on the fiber surfaces with respect to the degree of modification (DSt) for the entire chemically modified cellulose nanofibers (which is synonymous with the acyl group degree of substitution (DS)), is preferably 1.05 or higher. A larger value for the DS heterogeneity ratio corresponds to a more non-uniform structure similar to a sheath-core structure (that is, although the fiber surfaces are highly chemically modified, the center sections of the fibers maintain the original largely unmodified cellulose structure), which helps to provide the high tensile strength and dimensional stability of cellulose while improving the affinity with the resin during compositing with the resin, and improving the dimensional stability of the resin composition. The DS heterogeneity ratio is more preferably 1.1 or greater, 1.2 or greater, 1.3 or greater, 1.5 or greater or 2 or greater, while from the viewpoint of facilitating production of chemically modified cellulose nanofibers, it is preferably 30 or lower, 20 or lower, 10 or lower, 6 or lower, 4 or lower or 3 or lower.
The value of DSs will differ depending on the degree of modification of the esterified cellulose nanofibers, but for example, it is preferably 0.1 or greater, more preferably 0.2 or greater, even more preferably 0.3 or greater and yet more preferably 0.5 or greater, and preferably 3.0 or lower, more preferably 2.5 or lower, even more preferably 2.0 or lower, yet more preferably 1.5 or lower, especially preferably 1.2 or lower and most preferably 1.0 or lower. The preferred range for DSt is as described above for the acyl substituent (DS).
A smaller coefficient of variation (CV) for the DS heterogeneity ratio of the chemically modified cellulose nanofibers is preferred for lower variation in the physical properties of the resin composition. The coefficient of variation is preferably 50% or lower, 40% or lower, 30% or lower or 20% or lower. The coefficient of variation may be lowered, for example, by a method of chemical modification after defibration of the cellulose fiber starting material to obtain chemically modified cellulose nanofibers (sequential method), while it is raised by a method of simultaneous defibration and chemical modification of the cellulose fiber starting material (simultaneous method). While the action mechanism for this is not completely understood, it is believed that in the simultaneous method, chemical modification proceeds further with the narrow fibers that are initially formed by defibrating, while reduction in hydrogen bonding between the cellulose microfibrils due to the chemical modification results in further defibration and leads to a larger coefficient of variation of the DS heterogeneity ratio.
The coefficient of variation (CV) of the DS heterogeneity ratio can be obtained by sampling 100 g of the aqueous dispersion of the chemically modified cellulose nanofibers (solid content: ≥10 mass%), using 10 g each of the freeze-shattered substance as measuring samples, calculating the DS heterogeneity ratio from DSt and DSs for the 10 samples, and calculating by the following formula from the standard deviation (σ) and arithmetic mean (μ) of the DS heterogeneity ratio between the 10 samples.

$$\text{DS heterogeneity ratio} = \text{DSs/DSt}$$

$$\text{Coefficient of variation (\%)} = \text{Standard deviation } \sigma\text{/arithmetic mean } \mu \times 100$$

The method of calculating DSs is as follows. Specifically, powdered esterified cellulose nanofibers obtained by freeze-pulverizing are placed on a 2.5 mmφ dish-shaped sample stand and the surface is pressed flat and measured by X-ray photoelectron spectroscopy (XPS). The XPS spectrum reflects the structural elements and chemically bonded

state of the sample surface layer alone (typically about several nanometers). The obtained C1s spectrum is analyzed by peak separation, and calculation is performed by the following formula using the area intensity (Ixf) of the peak attributed to one carbon atom of the modifying group, with respect to the area intensity (Ixp) of the peak attributed to the C2-C6 carbons of the pyranose rings of cellulose (289 eV, C-C bond).

$$DSs = (Ixf) \times 5/(Ixp)$$

For example, when the modifying group is acetyl, the C1s spectrum is analyzed by peak separation at 285 eV, 286 eV, 288 eV and 289 eV, and the peak at 289 eV may be used for Ixp while the peak due to acetyl group O-C=O bonds (286 eV) may be used for Ixf.

The conditions for XPS measurement are the following, as an example.

Device: VersaProbe II by Ulvac-Phi, Inc.
Excitation source: mono. AlK$\alpha$ 15 kV $\times$ 3.33 mA
Analysis size: ~200 $\mu$m$\varphi$
Photoelectron take-off angle: 45°
Capture range
Narrow scan: C 1s, O 1s
Pass energy: 23.5 eV

<Resin>

The resin included in the resin composition of the disclosure may be a thermoplastic resin, a thermosetting resin or a photocuring resin. According to a typical aspect, the resin is a thermoplastic resin. The thermoplastic resin may be a crystalline resin with a melting point in the range of 100°C to 350°C, or an amorphous resin with a glass transition temperature in the range of 100 to 250°C. The melting point, for the purpose of the disclosure, is the peak top temperature of the endothermic peak appearing upon temperature increase from 23°C at a temperature-elevating rate of 10°C/min using a differential scanning calorimeter (DSC), or when two or more endothermic peaks are present, it is the peak top temperature of the endothermic peak furthest at the high-temperature end. The enthalpy of the endothermic peak is preferably 10 J/g or greater and more preferably 20 J/g or greater. During the measurement, preferably the sample is heated once to temperature conditions of (melting point + 20°C) or higher, and after the resin has been melted, it is cooled to 23°C at a temperature-lowering rate of 10°C/min and used as the sample. For the present disclosure, the glass transition temperature is the peak top temperature of the peak at which the reduction in storage modulus is large and the loss modulus is maximum, during measurement with an applied frequency of 10 Hz while increasing the temperature from 23°C at a temperature-elevating rate of 2°C/min, using a dynamic viscoelasticity measuring apparatus. When two or more loss modulus peaks appear, it represents the peak top temperature of the peak that is furthest at the high-temperature end. The measuring frequency during this time is preferably one or more times in at least 30 seconds, in order to increase the measuring precision. The method of preparing the measuring sample is not particularly restricted, but from the viewpoint of eliminating the effect of molding strain it is preferred to use a strip cut out from a hot press molded article, the size (width or thickness) of the cut out strip preferably being as small as possible, from the viewpoint of heat conduction.

Examples of thermoplastic resins include polyolefin-based resins, polyamide-based resins, polyester-based resins, polyacetal-based resins, polyphenylene ether-based resins and polyphenylene sulfide-based resins, as well as blends of two or more of these, and from the viewpoint of handleability and cost they are preferably polyolefin-based resins, polyamide-based resins, polyester-based resins or polyacetal-based resins, more preferably polyamide-based resins, polyolefin-based resins or polyacetal-based resins, and most preferably polyamide-based resins or polyacetal-based resins. From the viewpoint of increasing the heat resistance of the resin composition, the melting point of the thermoplastic resin (especially for a crystalline resin) is preferably 140°C or higher, 150°C or higher, 160°C or higher, 170°C or higher, 180°C or higher, 190°C or higher, 200°C or higher, 210°C or higher, 220°C or higher, 230°C or higher, 240°C or higher, 245°C or higher or 250°C or higher.

For a resin with a relatively low melting point (such as a polyolefin-based resin), for example, the melting point of the thermoplastic resin may be 150°C to 190°C or 160°C to 180°C, while for a resin with a relatively high melting point (such as a polyamide-based resin), for example, it may be 220°C to 350°C or 230°C to 320°C.

The thermoplastic resin is preferably at least one type selected from the group consisting of polyolefin-based resins, polyacetate-based resins, polycarbonate-based resins, polyamide-based resins, polyester-based resins, polyphenylene ether-based resins and acrylic-based resins.

Polyolefin-based resins that are preferred as thermoplastic resins are polymers obtained by polymerizing olefins

(such as α-olefins) and/or alkenes as monomer units. Specific examples of polyolefin-based resins include ethylene-based (co)polymers such as low-density polyethylene (for example, linear low-density polyethylene), high-density polyethylene, ultralow-density polyethylene and ultrahigh molecular weight polyethylene, polypropylene-based (co)polymers such as polypropylene, ethylene-propylene copolymer and ethylene-propylene-diene copolymer, and copolymers of ethylene and α-olefins, such as ethylene-acrylic acid copolymer, ethylene-methyl methacrylate copolymer and ethylene-glycidyl methacrylate copolymer.

The most preferred polyolefin-based resin is polypropylene. Particularly preferred is polypropylene, which has a melt mass-flow rate (MFR) of 3 g/10 min to 30 g/10 min, as measured at 230°C with a load of 21.2 N, according to ISO1133. The lower limit for MFR is more preferably 5 g/10 min, even more preferably 6 g/10 min and most preferably 8 g/10 min. The upper limit for MFR is more preferably 25 g/10 min, even more preferably 20 g/10 min and most preferably 18 g/10 min. The MFR is preferably not above this upper limit from the viewpoint of increased toughness of the resin composition, and it is preferably not less than the lower limit from the viewpoint of the flow property of the resin composition.

An acid-modified polyolefin-based resin may also be used as appropriate to increase the affinity with the cellulose nanofibers. Examples of acids to be used for acid modification include mono or polycarboxylic acids, such as maleic acid, fumaric acid, succinic acid, phthalic acid, and their anhydrides, as well as citric acid. Maleic acid or its anhydride is especially preferred to more easily increase the modification rate. While the modification method is not particularly restricted, a common method involves heating the polyolefin-based resin to above its melting point in the presence or in the absence of a peroxide, and melt kneading. The polyolefin resin to be acid-modified may be any of the aforementioned polyolefin-based resins, but polypropylene is especially suitable for use. The acid-modified polypropylene-based resin may be used alone, but it is preferably used in admixture with an unmodified polypropylene-based resin in order to adjust the modification rate of the entire resin. The proportion of acid-modified polypropylene-based resin with respect to the total polypropylene-based resin is preferably 0.5 mass% to 50 mass%. A more preferred lower limit is 1 mass%, 2 mass%, 3 mass%, 4 mass% or 5 mass%. A more preferred upper limit is 45 mass%, 40 mass%, 35 mass%, 30 mass% or 20 mass%. In order to maintain interfacial strength between the resin and the cellulose nanofibers it is preferably higher than the lower limit, and in order to maintain ductility as a resin it is preferably lower than the upper limit.

The melt mass-flow rate (MFR) of the acid-modified polypropylene-based resin as measured at 230°C with a load of 21.2 N according to ISO1133 is preferably 50 g/10 min or higher, 100 g/10 min or higher, 150 g/10 min or higher or 200 g/10 min or higher, from the viewpoint of increasing affinity with the interface between the resin and the cellulose nanofibers. There is no particular upper limit, but it is preferably 500 g/10 min in order to maintain mechanical strength.

Preferred polyamide-based resins for the thermoplastic resin include polyamides obtained by polycondensation reaction of lactams (such as polyamide 6, polyamide 11 and polyamide 12), and polyamides obtained by copolymerization of diamines (such as 1,6-hexanediamine, 2-methyl-1,5-pentanediamine, 1,7-heptanediamine, 2-methyl-1-6-hexanediamine, 1,8-octanediamine, 2-methyl-1,7-heptanediamine, 1,9-nonanediamine, 2-methyl-1,8-octanediamine, 1,10-decanediamine, 1,11-undecanediamine, 1,12-dodecanediamine and m-xylylenediamine) with dicarboxylic acids (such as butanedioic acid, pentanedioic acid, hexanedioic acid, heptanedioic acid, octanedioic acid, nonanedioic acid, decanedioic acid, benzene-1,2-dicarboxylic acid, benzene-1,3-dicarboxylic acid, benzene-1,4-dicarboxylic acid, cyclohexane-1,3-dicarboxylic acid and cyclohexane-1,4-dicarboxylic acid) (such polyamides including polyamide 6,6, polyamide 6,10, polyamide 6,11, polyamide 6,12, polyamide 6,T, polyamide 6,I, polyamide 9,T, polyamide 10,T, polyamide 2M5,T, polyamide MXD, 6, polyamide 6,C and polyamide 2M5,C), as well as copolymers obtained by copolymerization of these (such as polyamide 6,T/6,I).

More preferred among these polyamide-based resins are aliphatic polyamides such as polyamide 6, polyamide 11, polyamide 12, polyamide 6,6, polyamide 6,10, polyamide 6,11 and polyamide 6,12, and alicyclic polyamides such as polyamide 6,C and polyamide 2M5,C.

From the viewpoint of satisfactory heat resistance for the resin composition, the melting point of the polyamide-based resin is preferably 220°C or higher, 230°C or higher, 240°C or higher, 245°C or higher or 250°C or higher, while from the viewpoint of easier production of the resin composition, the melting point is preferably 350°C or lower, 320°C or lower or 300°C or lower.

There are no particular restrictions on the terminal carboxyl group concentration of the polyamide-based resin, but it is preferably 20 μmol/g or greater or 30 μmol/g or greater, and preferably 150 μmol/g or lower, 100 μmol/g or lower or 80 μmol/g or lower.

For a polyamide-based resin, the proportion of carboxyl terminal groups with respect to the total terminal groups ([COOH]/[total terminal groups]) is preferably 0.30 or higher, 0.35 or higher, 0.40 or higher or 0.45 or higher, from the viewpoint of dispersibility of the cellulose nanofibers in the resin composition, while from the viewpoint of color tone of the resin composition it is preferably 0.95 or lower, 0.90 or lower, 0.85 or lower or 0.80 or lower.

The terminal group concentration of the polyamide-based resin can be adjusted by a publicly known method. The adjusting method may be addition of a terminal group adjuster that reacts with the terminal groups (for example, a diamine compound, monoamine compound, dicarboxylic acid compound, monocarboxylic acid compound, acid anhydride, monoisocyanate, monoacid halide, monoester or monoalcohol), to the polymerization solution, so as to result in the prescribed terminal group concentration during polymerization of the polyamide.

Terminal group adjusters that react with terminal amino groups include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids such as cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid and phenylacetic acid; and mixtures of any selected from among the foregoing. Among these, from the viewpoint of reactivity, stability of capped ends and cost, one or more terminal group adjusters selected from the group consisting of acetic acid, propionic acid, butyric acid, valeric acid, caproic acid, caprylic acid, lauric acid, tridecanoic acid, myristic acid, palmitic acid, stearic acid and benzoic acid are preferred, with acetic acid being most preferred.

Terminal group adjusters that react with terminal carboxyl groups include aliphatic monoamines such as methylamine, ethylamine, propylamine, butylamine, hexylamine, octylamine, decylamine, stearylamine, dimethylamine, diethylamine, dipropylamine and dibutylamine; alicyclic monoamines such as cyclohexylamine and dicyclohexylamine; aromatic monoamines such as aniline, toluidine, diphenylamine and naphthylamine; and any mixtures of the foregoing. Among these, from the viewpoint of reactivity, boiling point, capped end stability and cost, it is preferred to use one or more terminal group adjusters selected from the group consisting of butylamine, hexylamine, octylamine, decylamine, stearylamine, cyclohexylamine and aniline.

The concentration of the amino terminal groups and carboxyl terminal groups in the polyamide-based resin can be determined from the integral of the characteristic signal corresponding to each terminal group, according to $^1$H-NMR. This method is preferred from the viewpoint of precision and convenience. More specifically, it is recommended to use the method described in Japanese Unexamined Patent Publication HEI No. 7-228775, with heavy trifluoroacetic acid as the measuring solvent, and with at least 300 scans.

The intrinsic viscosity [η] of the polyamide-based resin measured in concentrated sulfuric acid at 30°C is preferably 0.6 to 2.0 dL/g, 0.7 to 1.4 dL/g, 0.7 to 1.2 dL/g or 0.7 to 1.0 dL/g, from the viewpoint of obtaining a satisfactory flow property in a die and a satisfactory outer appearance of a molded piece obtained by injection molding, for example, of the resin composition. Throughout the present disclosure, "intrinsic viscosity" is synonymous with the viscosity commonly known as the limiting viscosity. The intrinsic viscosity is determined by a method in which each ηsp/c of several measuring solvents with different concentrations is measured in 96% concentrated sulfuric acid under temperature conditions of 30°C, the relational expression between each ηsp/c and the concentration (c) is derived, and the concentration is extrapolated to zero. The value extrapolated to zero is the intrinsic viscosity. The details of this method are described in Polymer Process Engineering (Prentice-Hall, Inc. 1994), p. 291-294. From the viewpoint of precision it is preferred to use at least four concentrations (such as 0.05 g/dL, 0.1 g/dL, 0.2 g/dL and 0.4 g/dL) as the different concentrations of the measuring solvents.

Preferred polyester-based resins to be used for the thermoplastic resin include one or more from among polyethylene terephthalate (PET), polyethylene naphthalate (PEN), polybutylene terephthalate (PBT), polybutylene succinate (PBS), polybutylene succinate adipate (PBSA), polybutylene adipate terephthalate (PBAT), polyhydroxyalkanoic acids (PHA), polylactic acid (PLA) and polyallylate (PAR). More preferred among these are PET, PBS, PBSA, PBT and PEN, with PBS, PBSA and PBT being especially preferred.

The terminal groups of the polyester-based resin may be arbitrarily changed depending on the monomer proportion during polymerization, or on the presence or amount of addition of a terminal stabilizer. For a polyester-based resin, the proportion of carboxyl terminal groups with respect to the total terminal groups ([COOH]/[total terminal groups]) is preferably 0.30 or higher, 0.35 or higher, 0.40 or higher or 0.45 or higher, from the viewpoint of dispersibility of the cellulose nanofibers in the resin composition, while from the viewpoint of color tone of the resin composition it is preferably 0.95 or lower, 0.90 or lower, 0.85 or lower or 0.80 or lower.

Polyacetal-based resins preferred as thermoplastic resins are commonly homopolyacetals obtained from formaldehyde starting materials and copolyacetals with trioxane as the main monomer and comprising 1,3-dioxolane as a comonomer component, and although both of these may be used, copolyacetals are preferably used from the viewpoint of thermal stability during working. The percentage of the structure derived from the comonomer component (such as 1,3-dioxolane) is preferably 0.01 mol% or greater, 0.05 mol% or greater, 0.1 mol% or greater or 0.2 mol% or greater, from the viewpoint of thermal stability during extrusion and shaping, and preferably 4.0 mol% or lower, 3.5 mol% or lower, 3.0 mol% or lower, 2.5 mol% or lower or 2.3 mol% or lower, from the viewpoint of mechanical strength.

<Liquid polymer>

A liquid polymer in the resin composition of the disclosure is a polymer having a flow property at 23°C. According to one aspect, the liquid polymer has a glass transition temperature (Tg). According to another aspect, the liquid polymer may be a conjugated diene-based polymer or a non-conjugated diene-based polymer. According to yet another aspect,

the liquid polymer is liquid rubber. For the purpose of the disclosure, "liquid rubber" is a substance having a flow property at 23°C and forming a rubber elastomer by crosslinking (more specifically, vulcanization) and/or chain extension. That is, according to one aspect the liquid rubber is uncured.

The "flow property" means, according to one aspect, that when the liquid polymer that has been dissolved in cyclohexane is placed in a vial with dimensions of 21 mm torso diameter × 50 mm full length at 23°C and then dried, causing the liquid polymer to fill the vial up to a height of 1 mm, and the vial is then closed shut, vertically inverted and allowed to stand for 24 hours, the substance can be observed to move at least 0.1 mm in the height direction.

The liquid polymer may have a common monomer composition for a polymer, and it preferably has a relatively low molecular weight from the viewpoint of easier handleability and obtaining satisfactory dispersibility of the cellulose nanofibers. According to one aspect, the liquid polymer is in liquid form with a number-average molecular weight (Mn) of 80,000 or lower. Unless otherwise specified, the number-average molecular weight and weight-average molecular weight of the polymers of the disclosure are the values determined in terms of standard polystyrene, using gel permeation chromatography with a chloroform solvent, at a measuring temperature of 40°C.

According to one aspect, the liquid polymer may be combined with the cellulose nanofibers to form a master batch, the master batch being combined with a resin to form the resin composition of the disclosure.

The number-average molecular weight (Mn) of the liquid polymer is preferably 1,000 or greater, 1,500 or greater or 2,000 or greater, from the viewpoint of thermal stability and of increasing dispersibility of the cellulose nanofibers in the resin, and preferably 80,000 or lower, 50,000 or lower, 40,000 or lower, 30,000 or lower or 10,000 or lower, from the viewpoint of exhibiting a high flow property suitable for forming a satisfactory dispersion of the cellulose nanofibers in the liquid polymer.

The weight-average molecular weight (Mw) of the liquid polymer is preferably 1,000 or greater, 2,000 or greater or 4,000 or greater, from the viewpoint of thermal stability and of increasing dispersibility of the cellulose nanofibers in the resin, and preferably 240,000 or lower, 150,000 or lower or 30,000 or lower, from the viewpoint of exhibiting a high flow property suitable for forming a satisfactory dispersion of the cellulose nanofibers in the liquid polymer.

The ratio of the number-average molecular weight (Mn) and the weight-average molecular weight (Mw) (Mw/Mn) of the liquid polymer is preferably 1.5 or greater, 1.8 or greater or 2 or greater from the viewpoint of allowing high levels of multiple properties (which are, according to one aspect, high levels of both satisfactory dispersion of the cellulose nanofibers in the resin and a satisfactory flexural modulus of the resin composition) by producing some degree of variation in the molecular weight, and preferably 10 or lower, 8 or lower, 5 or lower, 3 or lower or 2.7 or lower, from the viewpoint of stably obtaining the desired physical properties for a resin composition, such as flow property and impact resistance, without excessively large variation in molecular weight.

The liquid polymer may be one with satisfactory thermal stability. According to one aspect, the thermal decomposition initiation temperature ($T_D$) of the liquid polymer is higher than 200°C, or 210°C or higher, 230°C or higher, 250°C or higher or 300°C or higher, from the viewpoint of satisfactory thermal stability. While a higher thermal decomposition initiation temperature is preferred, according to one aspect it is 500°C or lower, 450°C or lower or 400°C or lower, from the viewpoint of availability of the liquid polymer.

The glass transition temperature of the liquid polymer is preferably -150°C or higher, - 120°C or higher or -100°C or higher from the viewpoint of satisfactory thermal stability, and preferably 25°C or lower, 10°C or lower or 0°C or lower, from the viewpoint of a satisfactory flow property.

According to one aspect, the liquid polymer includes a diene-based polymer, and according to another aspect it includes a conjugated diene-based polymer or non-conjugated diene-based polymer, or their hydrogenated forms. The polymer or its hydrogenated product may also be an oligomer. The monomer composing the liquid polymer may be an unmodified or modified monomer (such as an acid modified or hydroxyl-modified monomer). According to one aspect, the liquid polymer may have reactive groups at both ends (for example, one or more selected from the group consisting of hydroxyl, carboxy, isocyanato, thio, amino and halo groups), in which case it may be bifunctional. The reactive groups contribute to crosslinking and/or chain extension of the liquid polymer.

[Conjugated diene-based polymer]

The conjugated diene-based polymer may be a homopolymer or a copolymer of two or more conjugated diene monomers or a copolymer of a conjugated diene monomer and another monomer. The copolymer may be either random or block.

Conjugated diene monomers include 1,3-butadiene, isoprene, 2,3-dimethyl-1,3-butadiene, 1,3-pentadiene, 3-methyl-1,3-pentadiene, 1,3-heptadiene and 1,3-hexadiene, and one of these or a combination of two or more may be used.

According to one aspect, the conjugated diene-based polymer is a copolymer of a conjugated diene monomer and an aromatic vinyl monomer.

Aromatic vinyl monomers are not particularly restricted so long as they are monomers that are copolymerizable with conjugated diene monomers, and examples include styrene, *m*- or *p*-methylstyrene, α-methylstyrene, ethylstyrene,

*p-tert*-butylstyrene, vinylethylbenzene, vinylxylene, vinylnaphthalene, diphenylethylene and divinylbenzene, among which any one or combination of two or more may be used. Styrene is preferred from the viewpoint of molding workability of the resin composition and impact resistance of the molded article.

Random copolymers include butadiene-isoprene random copolymer, butadiene-styrene random copolymer, isoprene-styrene random copolymer and butadiene-isoprene-styrene random copolymer. The compositional distribution of each monomer in the copolymer chain may be a completely random copolymer having a nearly statistically random composition, or a tapered (gradient) random copolymer having a gradient in the compositional distribution. A composition with a conjugated diene-based polymer bond form, i.e. 1,4-bonds or 1,2-bonds, may have uniform or different molecules.

A block copolymer may be a copolymer composed of two or more blocks. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content and the hydrogenation rate.

The amount of vinyl bonds (for example, butadiene 1,2- or 3,4-bonds) among the conjugated diene bond units in the conjugated diene-based polymer is preferably 10 mol% to 75 mol% or 13 mol% to 65 mol%.

The amount of vinyl bonds (for example, butadiene 1,2-bonds) among the conjugated diene bond units can be determined by $^{13}C$-NMR (quantitative mode). Specifically, integration of the peak area obtained by $^{13}C$-NMR gives a value proportional to the amount of carbon in each structural unit, which can then be converted to mass% for each structural unit.

Styrene 145 to 147 ppm
Vinyl 110 to 116 ppm
Diene (cis) 24 to 28 ppm
Diene (trans) 29 to 33 ppm

For a copolymer of a conjugated diene monomer and an aromatic vinyl monomer, the amount of aromatic vinyl monomer bonded to the conjugated diene monomer (also referred to herein as the "aromatic vinyl bond amount") is preferably 5 mol% to 70 mol% or 10 mol% to 50 mol% with respect to 100% as the total moles of the conjugated diene-based polymer.

A hydrogenated conjugated diene-based polymer may be a hydrogenated form of any of the conjugated diene-based polymers mentioned above, and for example, it may be a hydrogenated butadiene homopolymer, isoprene homopolymer, styrene-butadiene copolymer or acrylonitrile-butadiene copolymer.

According to a preferred aspect, the liquid polymer is one or more selected from the group consisting of polybutadiene, butadiene-styrene copolymer, polyisoprene and polychloroprene. Their derivatives (such as maleic anhydride-modified derivatives, methacrylic acid-modified derivatives, terminal hydroxyl-modified derivatives, hydrogenated products, or combinations of these), may also be used.

[Non-conjugated diene-based polymer]

The non-conjugated diene-based polymer may be a homopolymer or a copolymer of two or more non-conjugated diene monomers or a copolymer of a non-conjugated diene monomer and another monomer. The copolymer may be either random or block. Non-conjugated diene-based polymers include olefin-based copolymers (such as liquid paraffin), silicone polymers and acrylic polymers. For example, when the liquid polymer is liquid rubber, the non-conjugated diene-based polymer may be:

an olefin-based copolymer such as ethylene-propylene rubber, ethylene-propylene-diene rubber, ethylene-butene-diene rubber or ethylene-$\alpha$-olefin copolymer, or

butyl rubber, brominated butyl rubber, acrylic rubber, fluorine rubber, silicone rubber, chlorinated polyethylene rubber, epichlorohydrin rubber, $\alpha,\beta$-unsaturated nitrile-acrylic acid ester-conjugated diene copolymer rubber, urethane rubber or polysulfide rubber.

For ethylene-α-olefin copolymers, monomers that may be copolymerized with the ethylene unit include aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1, eicosene-1 and isobutylene; aromatic vinyl monomers such as styrene and substituted styrene; esteric vinyl monomers such as vinyl acetate, acrylic acid ester, methacrylic acid ester, glycidylacrylic acid ester, glycidylmethacrylic acid ester and hydroxyethylmethacrylic acid ester, nitrogen-containing vinyl monomers such as acrylamide, allylamine, vinyl-p-aminobenzene, acrylonitrile, and dienes such as butadiene, cyclopentadiene, 1,4-hexadiene and isoprene.

The ethylene-α-olefin copolymer is preferably a copolymer of ethylene and one or more α-olefins of 3 to 20 carbon atoms, more preferably a copolymer of ethylene and one or more α-olefins of 3 to 16 carbon atoms, and most preferably a copolymer of ethylene and one or more α-olefins of 3 to 12 carbon atoms.

From the viewpoint of exhibiting impact resistance, the molecular weight of the ethylene-α-olefin copolymer is a number-average molecular weight (Mn) of preferably 10,000 or higher, more preferably 10,000 to 100,000, even more preferably 10,000 to 80,000 and yet more 20,000 to 60,000, measured with a gel permeation chromatography apparatus using 1,2,4-trichlorobenzene as the solvent, at 140°C, in terms of standard polystyrene.

From the viewpoint of handleability during processing, the ethylene unit content for the ethylene-α-olefin copolymer is preferably 30 to 95 mass% with respect to the total amount of the ethylene-α-olefin copolymer.

The ethylene-α-olefin copolymer can be produced by a conventional publicly known method described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 or US Patent No. 5272236, for example.

According to one aspect, the liquid polymer includes one or more types selected from the group consisting of diene rubber, silicone rubber, urethane rubber and polysulfide rubber, as well as their hydrogenated forms.

From the viewpoint of satisfactorily dispersing the cellulose nanofibers in the liquid polymer, the viscosity of the liquid polymer at 25°C is preferably 1,000,000 mPa·s or lower, 500,000 mPa·s or lower or 200,000 mPa·s or lower, while from the viewpoint of thermal stability, increasing dispersibility of the cellulose nanofibers in the resin, and the mechanical properties of the resin composition, it is preferably 100 mPa·s or higher, 300 mPa·s or higher or 500 mPa·s or higher.

From the viewpoint of satisfactorily dispersing the cellulose nanofibers in the liquid polymer, and from the viewpoint of satisfactorily dispersing the cellulose nanofibers in the resin by hot kneading, the viscosity of the liquid polymer at 50°C is preferably 1,000,000 mPa·s or lower, 500,000 mPa·s or lower, 200,000 mPa·s or lower or 100,000 mPa·s or lower, while from the viewpoint of thermal stability, increasing dispersibility of the cellulose nanofibers in the resin, and the mechanical properties of the resin composition, it is preferably 50 mPa·s or higher, 100 mPa·s or higher or 500 mPa·s or higher.

From the viewpoint of satisfactorily dispersing the cellulose nanofibers in the liquid polymer, and from the viewpoint of satisfactorily dispersing the cellulose nanofibers in the resin by hot kneading, the viscosity of the liquid polymer at 80°C is preferably 1,000,000 mPa·s or lower, 500,000 mPa·s or lower, 250,000 mPa·s or lower or 100,000 mPa·s or lower, while from the viewpoint of thermal stability, increasing dispersibility of the cellulose nanofibers in the resin, and the mechanical properties of the resin composition, it is preferably 50 mPa·s or higher, 100 mPa·s or higher or 300 mPa·s or higher.

From the viewpoint of satisfactorily dispersing the cellulose nanofibers in the liquid polymer, the viscosity of the liquid polymer at 0°C is preferably 2,000,000 mPa·s or lower, 1,000,000 mPa·s or lower or 400,000 mPa·s or lower, while from the viewpoint of thermal stability, increasing dispersibility of the cellulose nanofibers in the resin, and the mechanical properties of the resin composition, it is preferably 200 mPa·s or higher, 600 mPa·s or higher or 1,000 mPa·s or higher.

It is preferred for the viscosity of the liquid polymer at 80°C, 50°C, 25°C and 0°C to all be within the aforementioned ranges, from the viewpoint of satisfactorily dispersing the cellulose nanofibers in the liquid polymer within a wide range of mixing temperatures.

The viscosity of the liquid polymer is the value measured using a Brookfield viscometer with a rotational speed of 10 rpm.

The ratio of the viscosity η50 of the liquid polymer at 50°C and the viscosity ηTm of the liquid polymer at the "melting point of the thermoplastic resin + 20°C" (η50/ηTm) is preferably 20 or greater, 30 or greater, 50 or greater, 80 or greater, 100 or greater or 150 or greater, from the viewpoint of satisfactorily covering the cellulose nanofibers with the liquid polymer, and preferably 10,000 or lower or 5000 or lower, from the viewpoint of facilitating material design according to the desired viscosity.

The ratio of the viscosity ηTm of the liquid polymer at the "melting point of the thermoplastic resin + 20°C" and the melt viscosity ηr of the thermoplastic resin at the "melting point of the thermoplastic resin + 20°C" (ηr/ηTm) is

preferably 100,000 or lower, 75,000 or lower, 50,000 or lower or 25,000 or lower from the viewpoint of satisfactorily dispersing the cellulose nanofibers in the molten resin, and preferably 100 or higher from the viewpoint of facilitating material design according to the desired viscosity.

According to a preferred aspect, the following relationships are satisfied:

$$\eta 50/\eta Tm \geq 20,$$

and

$$1 \leq \eta r/\eta 50 \leq 1000$$

for the viscosity η50 of the liquid polymer at 50°C, the viscosity ηTm of the liquid polymer at the melting point of the thermoplastic resin + 20°C, and the melt viscosity ηr of the thermoplastic resin at the melting point of the thermoplastic resin + 20°C. Controlling the viscosity of the liquid polymer is advantageous from the viewpoint of obtaining a satisfactory effect of increasing dispersibility by having the liquid polymer surrounding the cellulose nanofibers. The η50/ηTm ratio is an index of the change in viscosity when the liquid polymer is heated during melt mixing of the cellulose nanofibers, resin and liquid polymer. The ηr/η50 ratio is an index of the extent of fluidity in terms of balance between the liquid polymer and resin during melt mixing. If both the η50/ηTm ratio and ηr/η50 ratio satisfy the aforementioned relationships, then the liquid polymer will have a satisfactory flow property without excessive viscosity during melt mixing, thus providing an effect of allowing it to surround the cellulose nanofibers to improve dispersion of the cellulose nanofibers in the resin.

The ηr/η50 ratio is preferably 1 or higher, 2 or higher or 3 or higher, from the viewpoint of allowing the liquid polymer to permeate through the cellulose nanofiber surfaces during drying of the cellulose nanofibers to inhibit aggregation, and preferably 1000 or lower, 500 or lower or 300 or lower, from the viewpoint of having the liquid polymer satisfactorily surrounding the cellulose nanofibers without excessively increasing the flow property of the liquid polymer.

More preferred ranges for the η50/ηTm ratio, ηr/η50 ratio and ηr/ηTm may differ depending on the type of thermoplastic resin.

For example, from the viewpoint of facilitating material design according to the desired viscosity, it is advantageous for the η50/ηTm ratio to be relatively low for a thermoplastic resin with a relatively low melting point and relatively high for a thermoplastic resin with a relatively high melting point.

For a resin with a high melting point such as a polyamide-based resin it is also advantageous for the ηr/η50 ratio to be a relatively large value, from the viewpoint of facilitating material design according to the desired viscosity.

The ηr/ηTm ratio may be a relatively large value in a resin with very high crystallinity and high melt viscosity, such as a polyacetal-based resin.

According to one aspect, the thermoplastic resin is a polyolefin-based resin and satisfies the relationship:

$$\eta 50/\eta Tm \geq 20$$

for η50 and the ηTm at the melting point of the polyolefin-based resin + 20°C. The η50/ηTm ratio of the polyolefin-based resin is preferably 20 or higher, 30 or higher or 100 or higher from the viewpoint explained above, and also preferably 1000 or lower, 500 or lower or 300 or lower, from the viewpoint explained above.

When the thermoplastic resin is a polyolefin-based resin, it preferably satisfies the relationship:

$$\eta r/\eta Tm \leq 50{,}000$$

for ηr at the melting point of the polyolefin-based resin + 20°C and ηTm at the melting point of the polyolefin-based resin + 20°C. The ηr/ηTm ratio of the polyolefin-based resin is preferably 50,000 or lower, 30,000 or lower or 20,000 or lower, from the viewpoint explained above, and also preferably 100 or higher, from the viewpoint explained above.

According to one aspect, the thermoplastic resin is a polyacetal-based resin and satisfies the relationship:

$$\eta 50/\eta Tm \geq 20$$

for η50 and ηTm at the melting point of the polyacetal-based resin + 20°C. The η50/ηTm ratio of the polyacetal-based resin is preferably 20 or higher, 30 or higher, 45 or higher or 100 or higher, from the viewpoint explained above, and

also preferably 2000 or lower, 1500 or lower or 1000 or lower, from the viewpoint explained above.

When the thermoplastic resin is a polyacetal-based resin, it preferably satisfies the relationship:

$$\eta r/\eta Tm \leq 100{,}000$$

for ηr at the melting point of the polyacetal-based resin + 20°C and ηTm at the melting point of the polyacetal-based resin + 20°C. The ηTm/ηr ratio of the polyacetal-based resin is preferably 100,000 or lower, 50,000 or lower or 40,000 or lower, from the viewpoint explained above, and also preferably 100 or higher, from the viewpoint explained above.

According to one aspect, the thermoplastic resin is a polyamide-based resin and satisfies the relationship:

$$\eta 50/\eta Tm \geq 80$$

for η50 and the ηTm at the melting point of the polyamide-based resin + 20°C. The η50/ηTm ratio of the polyamide-based resin is preferably 80 or higher, 100 or higher, 150 or higher or 500 or higher, from the viewpoint explained above, and also preferably 10,000 or lower, 5000 or lower or 1000 or lower, from the viewpoint explained above.

When the thermoplastic resin is a polyamide-based resin, it preferably satisfies the relationship:

$$\eta r/\eta Tm \leq 50{,}000$$

for ηr at the melting point of the polyamide-based resin + 20°C and ηTm at the melting point of the polyamide-based resin + 20°C. The ηTm/ηr ratio of the polyamide-based resin is preferably 50,000 or lower, 40,000 or lower or 30,000 or lower, from the viewpoint explained above, and also preferably 100 or higher, from the viewpoint explained above.

<Dispersion aid>

According to one aspect, the resin composition of the embodiment does not comprise a surfactant. Since a liquid polymer tends to have more excellent thermal stability than a non-polymer surfactant, it is advantageous in that it does not adversely affect the resin composition or the mechanical properties, decorative properties and outer appearance of its molded articles, even when subjected to heating during production and processing of the resin composition. The resin composition according to one aspect does not comprise a surfactant since satisfactory dispersion of the cellulose nanofibers is achieved even without a surfactant, due to the presence of the liquid polymer. As used herein, the phrase "does not comprise a surfactant" means that the amount of surfactant in the resin composition is less than 0.1 part by mass with respect to 100 parts by mass of the liquid polymer. According to one aspect the amount of dispersion aid included is minimal from the viewpoint of increasing modification of the cellulose nanofiber surfaces by interaction, and of further improving dispersion of the cellulose nanofibers by the liquid polymer. The amount of dispersion aid with respect to 100 parts by mass of the liquid polymer is preferably 0.1 part by mass or greater, 1 part by mass or greater or 5 parts by mass or greater, from the viewpoint of improving dispersibility of the cellulose nanofibers, and preferably 50 parts by mass or lower, 30 parts by mass or lower or 10 parts by mass or lower, from the viewpoint of potential reduction in performance due to the dispersion aid.

According to one aspect, the dispersion aid more preferably has a hydrophilic segment and a hydrophobic segment in the same molecule (that is, it is an amphiphilic molecule), from the viewpoint of uniformly dispersing the fine cellulose fibers in the resin.

The hydrophilic segment is the portion that exhibits satisfactory affinity with the fine cellulose fibers when a hydrophilic structure is included. The hydrophilic structure may be a hydroxyl, thiol, carboxyl, sulfonic acid, sulfuric acid ester, phosphoric acid, boronic acid, silanol or sorbitan group, a group derived from a saccharide such as sucrose, a glycerin-derived group, a group represented by -OM, -COOM, $-SO_3M$, $-OSO_3M$, $-HMPO_4$ or $-M_2PO_4$ (where M is an alkali metal or alkaline earth metal), or a primary to tertiary amine or quaternary ammonium salt. The counter anion of a quaternary ammonium salt may be one or more hydrophilic groups selected from the group consisting of halide ions such as hydroxide ion, fluoride ion, chloride ion, bromide ion or iodide ion, and nitrate ion, formate ion, acetate ion, trifluoroacetate ion, p-toluenesulfonate ion, hexafluorophosphate and tetrafluoroborate.

Examples of hydrophilic segments include segments with repeating units containing quaternary ammonium salt structures, polyvinyl alcohol segments, polyvinylpyrrolidone segments, polyacrylic acid segments, carboxyvinyl polymer segments, cationized guar gum segments, hydroxyethyl cellulose segments, methyl cellulose segments, carboxymethyl cellulose segments and polyurethane soft segments (specifically, diol segments).

Examples of hydrophobic segments include segments with hydrocarbon groups and segments including a

polymer structure, such as the following:
preferred segments with hydrocarbon groups include alkyl-types, alkenyl-types, alkyl ether-types, alkenyl ether-types, alkylphenyl ether-types, alkenylphenyl ether-types, rosin ester-types, bisphenol A-types, β-naphthyl-types, styrenated phenyl-types and hydrogenated castor oil types. The number of carbon atoms in a hydrophobic group alkyl chain or alkenyl chain (or for alkylphenyl or alkenylphenyl, the number of carbon atoms minus the phenyl group) is preferably 5 or greater, 10 or greater, 12 or greater or 16 or greater.

A segment containing a polymer structure is preferably an acrylic polymer, styrene-based resin, vinyl chloride-based resin, vinylidene chloride-based resin or polyolefin-based resin, a polycondensate of an organic dicarboxylic acid of 4 to 12 carbon atoms and an organic diamine of 2 to 13 carbon atoms, such as polyhexamethylene adipamide (6,6 nylon), polyhexamethylene azeramide (6,9 nylon), polyhexamethylene sebacamide (6,10 nylon), polyhexamethylene dodecanoamide (6,12 nylon) or polybis(4-aminocyclohexyl)methanedodecane, a polycondensate of co-amino acid (for example, ω-aminoundecanoic acid) (such as polyundecaneamide (11 nylon)), an amino acid lactam containing a lactam ring-opening polymer, such as the ε-aminocaprolactam ring-opening polymer polycapramide (6 nylon) or the ε-aminolaurolactam ring-opening polymer polylauric lactam (12 nylon), a polymer composed of a diamine and a dicarboxylic acid, or a polyacetal-based resin, polycarbonate-based resin, polyester-based resin, polyphenylene sulfide-based resin, polysulfone-based resin, polyether ketone-based resin, polyimide-based resin, fluorine-based resin, hydrophobic silicone-based resin, melamine-based resin, epoxy-based resin or phenol-based resin.

According to one aspect the amphiphilic molecule used may be any anionic surfactant, nonionic surfactant, cationic surfactant or amphoteric surfactant. The dispersion aid may be a polymeric surfactant or a reactive surfactant. From the viewpoint of affinity with the fine cellulose fibers it preferred to use a cationic surfactant or a nonionic surfactant, with a nonionic surfactant being preferred from the standpoint of heat resistance.

From the viewpoint of affinity with the cellulose nanofibers, the hydrophilic group of the surfactant may be sorbitan, a group derived from a saccharide such as sucrose, a glycerin-derived group, a hydroxyl, carboxyl, sulfonic acid or phosphoric acid group, -OM, -COOM, $-SO_3M$, $- OSO_3M$, $-HMPO_4$ or $-M_2PO_4$ (where M is an alkali metal or alkaline earth metal), or a primary to tertiary amine or quaternary ammonium salt. The counter anion of a quaternary ammonium salt may be one or more ions selected from the group consisting of halide ions such as hydroxide ion, fluoride ion, chloride ion, bromide ion or iodide ion, and nitrate ion, formate ion, acetate ion, trifluoroacetate ion, p-toluenesulfonate ion, hexafluorophosphate ion and tetrafluoroborate ion.

The structure of the hydrophobic group of the surfactant is preferably an alkyl-type, alkenyl-type, alkyl ether-type, alkenyl ether-type, alkylphenyl ether-type, alkenylphenyl ether-type, rosin ester-type, bisphenol A-type, β-naphthyl-type, styrenated phenyl-type or hydrogenated castor oil-type structure, because of their high affinity with resins. The number of carbon atoms in a hydrophobic group alkyl chain or alkenyl chain (or for alkylphenyl or alkenylphenyl, the number of carbon atoms minus the phenyl group) is preferably 5 or greater, 10 or greater, 12 or greater or 16 or greater. When the resin is a polyolefin-based resin, for example, a greater number of carbon atoms of the surfactant will increase affinity with the resin. The number of carbon atoms may be 30 or less, or 25 or less, for example.

The hydrophobic group is more preferably one having a cyclic structure or having bulk and a polyfunctional structure. Hydrophobic groups with a cyclic structure are preferably alkylphenyl ether-type, alkenylphenyl ether-type, rosin ester-type, bisphenol A-type, β-naphthyl-type and styrenated phenyl-type groups, and those with a polyfunctional structure are preferably hydrogenated castor oil-type (such as hydrogenated castor oil ether) groups. A rosin ester-type or hydrogenated castor oil-type is especially preferred.

More specific examples of surfactants include fatty acid esters (such as sorbitan fatty acid esters, glycerin fatty acid esters, sucrose fatty acid esters and propylene glycol fatty acid esters).

Dispersion aids other than surfactants include long-chain fatty acids such as palmitoleic acid, oleic acid, eicosenoic acid, myristic acid, pentadecylic acid, palmitic acid, margaric acid, stearic acid and arachidic acid, and long-chain amines such as palmitoylamine, oleylamine, eicosylamine, myristylamine, pentadecylamine, palmitylamine, margarylamine, stearylamine and arachidylamine. A "long-chain" is a chain length of 13 or more carbon atoms, and according to one aspect it has 13 to 21 carbon atoms.

<Additional components>

The resin composition may further include additional components as necessary, for improved performance. Such additional components include filler components other than cellulose nanofibers; compatibilizers; plasticizers; polysaccharides such as starch and alginic acid; natural proteins such as gelatin, nikawa and casein; inorganic compounds such as zeolite, ceramics, talc, silica, metal oxides and metal powders; coloring agents; perfumes; pigments; flow adjusters; leveling agents; conductive agents; heat stabilizers; antioxidants; antistatic agents; ultraviolet absorbers; ultraviolet dispersing agents; and deodorants. The content ratio of optional additional components in the resin composition is appropriately selected in a range that does not interfere with the desired effect of the invention, and for example, it may be 0.01 to 50 mass% or 0.1 to 30 mass%.

The liquid polymer may also be used in combination with the cellulose nanofibers to form a master batch. The cellulose nanofiber/liquid polymer mass ratio in the master batch may be 0.1/99.9 to 99.9/0.1, 1/99 to 99/1, 5/95 to 95/5, 10/90 to 90/10, 20/80 to 80/20, 30/70 to 70/30 or 40/60 to 60/40.

The master batch may either include or not include additional components with the cellulose nanofibers and liquid polymer. Such additional components may be one or more resins mentioned herein as resins to be included in the resin composition of the embodiment. The content of additional components in the master batch is appropriately selected in a range that does not interfere with the desired effect of the invention, and for example, it may be 0.01 to 50 mass% or 0.1 to 30 mass%.

The amount of cellulose nanofibers with respect to 100 parts by mass of the resin composition is preferably 0.001 parts by mass or greater, 0.01 parts by mass or greater, 0.1 part by mass or greater or 1 part by mass or greater, and preferably 100 parts by mass or lower, 80 parts by mass or lower, 70 parts by mass or lower, 50 parts by mass or lower or 30 mass% or lower, from the viewpoint of balance between processability and mechanical properties.

The amount of liquid polymer with respect to 100 parts by mass of the resin in the resin composition is preferably 0.001 parts by mass or greater, 0.01 parts by mass or greater, 0.1 part by mass or greater or 1 part by mass or greater, and preferably 100 parts by mass or lower, 80 parts by mass or lower, 70 parts by mass or lower, 50 parts by mass or lower, 30 mass% or lower, 10 mass% or lower or 8 parts by mass or lower, from the viewpoint of balance between processability and mechanical properties.

The amount of the cellulose nanofibers with respect to 100 mass% as the resin composition is preferably 0.001 mass% or greater, 0.01 mass% or greater, 0.1 mass% or greater or 1 mass% or greater, and preferably 50 mass% or lower, 40 mass% or lower, 30 mass% or lower or 20 mass% or lower, from the viewpoint of balance between processability and mechanical properties.

The content of cellulose nanofibers with respect to 100 mass% as the total of the cellulose nanofibers and liquid polymer in the resin composition is preferably 0.5 mass% or greater, 1 mass% or greater or 3 mass% or greater, from the viewpoint of obtaining a satisfactory reinforcing effect by the cellulose nanofibers, and preferably 80 mass% or lower, 60 mass% or lower, 33 mass% or lower, 30 mass% or lower, 20 mass% or lower or 10 mass% or lower, from the viewpoint of satisfactorily obtaining the advantage of using the liquid polymer.

The thermal decomposition initiation temperature T1 of the liquid polymer and the thermal decomposition initiation temperature T2 of the cellulose nanofibers preferably satisfy the relationship:

$$(T1) \geq (T2)$$

from the viewpoint of satisfactory mechanical properties, decorative properties and outer appearance for the resin composition and molded article.

The thermal decomposition initiation temperature T1 of the liquid polymer and the temperature T3, which is the melting point of the resin or the glass transition temperature + 70°C, preferably satisfy the relationship:

$$(T1) > (T3)$$

from the viewpoint of satisfactory mechanical properties, decorative properties and outer appearance for the resin composition and molded article.

T3 is the melting point, when the resin is a crystalline resin, or it is the glass transition temperature + 70°C, when the resin is an amorphous resin.

According to a particularly preferred aspect, the thermoplastic resin is a thermoplastic resin with crystallinity (i.e. having a melting point), and the temperature T3 is the melting point of the thermoplastic resin.

The thermal decomposition initiation temperature T1 of the liquid polymer and the temperature T4, which is the melting point of the resin or the glass transition temperature + 100°C, preferably satisfy the relationship:

$$(T1) > (T4)$$

from the viewpoint of satisfactory mechanical properties, decorative properties and outer appearance for the resin composition and molded article.

T4 is the melting point, when the resin is a crystalline resin, or it is the glass transition temperature + 100°C, when the resin is an amorphous resin.

According to a particularly preferred aspect, the thermal decomposition initiation temperature T 1 of the liquid polymer, the thermal decomposition initiation temperature T2 of the cellulose nanofibers and the temperature T3 which

is the melting point or glass transition temperature + 70°C of the resin, satisfy the relationship:

$$(T1) \geq (T2) > (T3)$$

from the viewpoint of satisfactory mechanical properties, decorative properties and outer appearance for the resin composition and molded article.

According to one aspect, the difference T1 - T2 between T1 and T2 is preferably 5°C or more, 10°C or more or 30°C or more, from the viewpoint of avoiding constraints on the process by using the liquid polymer, since the liquid polymer is less susceptible to heat degradation than the cellulose nanofibers, and also preferably 200°C or less, 150°C or less or 100°C or less, from the viewpoint of availability of the liquid polymer.

According to one aspect, the difference T1 - T3 between T1 and T3 is preferably 30°C or more, 50°C or more or 70°C or more, from the viewpoint of avoiding heat degradation of the liquid polymer by heat during production and processing of the resin composition to obtain satisfactory mechanical properties, decorative properties and outer appearance of the resin composition and the molded article obtained by molding it, and preferably 200°C or less, 150°C or less or 100°C or less, from the viewpoint of facilitating selection of a resin that imparts satisfactory mechanical properties to the resin composition and molded article.

According to one aspect, the difference T2 - T3 between T2 and T3 is preferably 30°C or more, 50°C or more or 70°C or more, from the viewpoint of avoiding heat degradation of the cellulose nanofibers by heat during production and processing of the resin composition to obtain satisfactory mechanical properties, decorative properties and outer appearance of the resin composition and the molded article obtained by molding it, and preferably 200°C or less, 150°C or less or 100°C or less, from the viewpoint of facilitating selection of a resin that imparts satisfactory mechanical properties to the resin composition and molded article.

According to one aspect, the difference T1 - T4 between T1 and T4 is preferably more than 0°C, 20°C or more or 40°C or more, from the viewpoint of avoiding heat degradation of the liquid polymer by heat during production and processing of the resin composition to obtain satisfactory mechanical properties, decorative properties and outer appearance of the resin composition and the molded article obtained by molding it, and preferably 170°C or less, 120°C or less or 70°C or less, from the viewpoint of facilitating selection of a resin that imparts satisfactory mechanical properties to the resin composition and molded article.

According to one aspect, the difference T2 - T4 between T2 and T4 is preferably more than 0°C, 20°C or more or 40°C or more, from the viewpoint of avoiding heat degradation of the cellulose nanofibers by heat during production and processing of the resin composition to obtain satisfactory mechanical properties, decorative properties and outer appearance of the resin composition and the molded article obtained by molding it, and preferably 170°C or less, 120°C or less or 70°C or less, from the viewpoint of facilitating selection of a resin that imparts satisfactory mechanical properties to the resin composition and molded article.

<Method for producing resin composition>

One aspect of the invention provides a method for producing a resin composition comprising cellulose nanofibers, a resin and a liquid polymer. According to one aspect, the method includes hot kneading a mixture comprising cellulose nanofibers, a resin and a liquid polymer. Since the liquid polymer can function as a dispersing agent for satisfactory dispersion of the cellulose nanofibers in the resin, it tends to have an excellent ability to inhibit aggregation of the cellulose nanofibers and excellent heat resistance, compared to a liquid non-polymer. Using such a liquid polymer will allow hot kneading to be carried out sufficiently without risking heat degradation of the components during production of the resin composition of the embodiment, and can thus cause satisfactory dispersion of the cellulose nanofibers in the resin. A resin composition produced in this manner has excellent mechanical properties and high surface smoothness, and is therefore advantageous for forming molded articles with superior decorative properties and aesthetic quality.

Examples for the hot kneading method include a method in which a master batch comprising the cellulose nanofibers and liquid polymer is produced first and then kneaded with the resin, and a method in which the cellulose nanofibers, resin and liquid polymer are simultaneously or successively loaded into a kneader and kneaded.

The hot kneading method may be:

a method of mixing cellulose nanofibers and a liquid polymer with optional additional components to produce a master batch, mixing this with a resin monomer to obtain a resin polymerization reaction, extruding the obtained resin composition into a strand, cooling to solidification in a water bath and obtaining molded pellets,
a method of melt kneading a mixture of the resin and the master batch using a single-screw or twin-screw extruder, extruding it into a strand, cooling to solidification in a water bath and obtaining molded pellets,
a method of melt kneading a mixture of the resin and the master batch using a single-screw or twin-screw extruder

and extruding and cooling it into the form of a rod or tube to obtain an extruded body, and
a method of melt kneading a mixture of the resin and the master batch using a single-screw or twin-screw extruder and extruding it with a T-die to obtain a molded sheet or film. According to a preferred aspect, a single-screw or twin-screw extruder is used for melt kneading of a mixture of the resin and master batch, extrusion into a strand, cooling solidification in a water bath and obtaining molded pellets.

For example, the master batch conveyed in the desired proportion with respect to the resin may be loaded into the resin and mixed, prior to melt kneading.
The master batch may be produced by mixing of the components that are to compose the master batch, using stirring means such as a rotating/revolving mixer, planetary mixer, homogenizer, homogenizer, propeller-type stirrer, rotary stirrer, electromagnetic stirrer, open roll, Banbury mixer, single-screw extruder or twin-screw extruder. The stirring may be carried out with heating for efficient shearing. Mixing with a homogenizer is preferred from the viewpoint of applying high shearing force and pressure to promote dispersion. The order of addition of the components during mixing is not limited, and methods include:

(1) a method of simultaneously adding and mixing the cellulose nanofibers, the liquid polymer and optional additional components, and
(2) a method of premixing the components other than the liquid polymer to obtain a pre-mixture, and then mixing the pre-mixture with the liquid polymer.

While either a single-screw extruder or a twin-screw extruder may be used for the melt kneading to obtain the resin composition, a twin-screw extruder is preferred to control the dispersibility of the cellulose nanofibers. The ratio LID of the cylinder length (L) of the extruder divided by the screw diameter (D) is preferably 30 or greater and most preferably 40 or greater. The screw rotational speed during kneading is preferably in the range of 50 to 800 rpm and more preferably in the range of 100 to 600 rpm.
Each of the screws in the cylinder of the extruder is optimized by combination of the kneading elements, i.e. an elliptical double-threaded transport screw and a kneading disc.
The minimum processing temperature recommended by suppliers of the thermoplastic resins is 255 to 270°C for polyamide 66, 225 to 240°C for polyamide 6, 225°C to 240°C for polybutylene terephthalate, 170°C to 190°C for a polyacetal resin and 160 to 180°C for polypropylene. The heating preset temperature is preferably in a range of 20°C higher than the recommended minimum processing temperature. Setting the mixing temperature to within this range will allow the cellulose nanofibers and the resin to be uniformly mixed.

<Resin composition form>

The resin composition of the embodiment may be provided in a variety of different forms. Specifically, it may be in the form of resin pellets, a sheet, fibers, plates or rods, with the form of resin pellets being more preferred for easier post-working and easier transport. The preferred form of resin pellets is round, elliptical or cylindrical, with the shape differing depending on the system used for cutting during extrusion. For example, pellets cut by the method known as "underwater cutting" are usually round, pellets cut by the method known as "hot cutting" are usually round or elliptical, and pellets cut by the method known as "strand cutting" are usually cylindrical. The preferred pellet diameter for round pellets is 1 mm to 3 mm. The preferred diameter for cylindrical pellets is 1 mm to 3 mm, and the preferred length is 2 mm to 10 mm. The diameter and length are preferably above these specified lower limits from the viewpoint of operational stability during extrusion, and they are preferably lower than the specified upper limits from the viewpoint of seizing in the molding machine in post-working.
The resin composition may be molded into a desired shape either alone or with other components, to produce a desired molded article. The method of combining the components and the method of molding are not particularly restricted, and may be selected depending on the desired molded article. The method of molding used may be, but is not limited to, injection molding, extrusion molding, blow molding, inflation molding or foam molding. Injection molding is most preferred among these from the viewpoint of designability and cost.

<Use of resin composition>

The resin composition obtained by the method of the embodiment is useful as a substitute for steel sheets, fiber-reinforced plastics (such as carbon fiber reinforced plastics and glass fiber reinforced plastics), and inorganic filler-containing resin composites. Examples of preferred uses for the resin composition include industrial machinery parts, general machine parts, automobile/railway/vehicle/ship/aerospace-related parts, electronic and electrical components, construction and civil engineering materials, daily household items, sports and leisure goods, wind power generation

case members, and container and packaging materials.

<Resin composition properties>

<Tensile yield strength>

According to one aspect, the tensile yield strength of the resin composition may be 20 MPa or greater, 50 MPa or greater or 80 MPa or greater, and 300 MPa or lower, 200 MPa or lower or 150 MPa or lower.

<Tensile breaking elongation>

According to one aspect, the tensile breaking elongation of the resin composition may be 2% or greater, 3% or greater or 5% or greater, and 200% or lower, 100% or lower or 20% or lower.

<Flexural modulus>

According to one aspect, the flexural modulus of the resin composition may be 2.0 GPa or greater, 2.5 GPa or greater, 3.0 GPa or greater, 3.5 GPa or greater, 3.7 GPa or greater or 3.9 GPa or greater, and 20.0 GPa or lower, 10.0 GPa or lower or 8.0 GPa or lower.

<250°C weight loss ($T_{250°C}$)>

The 250°C weight loss ($T_{250°C}$) of the resin composition is preferably 1.5% or lower, 1.4% or lower or 1.3% or lower, from the viewpoint of avoiding heat degradation during molding of the resin composition, and obtaining a molded article with satisfactory mechanical strength. While a lower 250°C weight loss is preferred, according to one aspect it is 0.01% or greater, 0.1% or greater or 0.3% or greater from the viewpoint of facilitating production of the resin composition. The 250°C weight loss ($T_{250°C}$) of the resin composition is the weight loss by TG analysis when the resin composition has been stored for 2 hours at 250°C under a nitrogen flow. The resin composition is increased in temperature from room temperature to 150°C at a temperature-elevating rate of 10°C/min, under a nitrogen flow of 100 ml/min, and held at 150°C for 1 hour, after which the temperature is increased from 150°C to 250°C at 10°C/min and held at 250°C for 2 hours. Calculation was by the following formula using the weight WO upon reaching 250°C and the weight W1 after holding at 250°C for 2 hours.

$$250°C \text{ Weight change rate (\%)}: (W1 - W0)/W0 \times 100$$

<Surface roughness>

The resin composition of the embodiment can exhibit excellent decorative properties and outer appearance due to its low surface roughness. The arithmetic mean surface roughness Ra of the resin composition is preferably 0.5 μm or lower, 0.4 μm or lower or 0.3 μm or lower. According to one aspect, the arithmetic mean surface roughness Ra may be 0.001 μm or greater, 0.01 μm or greater or 0.1 μm or greater from the viewpoint of facilitating production of the resin composition.

EXAMPLES

Exemplary modes of the invention will now be further illustrated using Examples, with the understanding that the invention is not limited to these Examples.

<Evaluation methods>

<Cellulose nanofibers>

[Fabrication of porous sheet]

A concentrated cake was first added to *tert*-butanol, and dispersed with a mixer until aggregates were no longer seen. The mixture was then prepared to a concentration of 0.5 mass% for 0.5 g of cellulose nanofiber solid weight. A 100 g portion of the obtained *tert*-butanol dispersion was filtered on filter paper. Without release from the filter paper,

the filtered substance together with the filter paper was sandwiched by two larger filter paper sheets, and dried for 5 minutes in an oven at 150°C while pressing the edges of the larger filter paper with a weight from above. The filter paper was then released to obtain a porous sheet without distortion. Sheets with air permeability resistance up to 100 sec/100 ml per 10 g/$m^2$ basis weight of the sheet were considered to be porous sheets, and were used as measuring samples.

After measuring the basis weight W (g/$m^2$) of each sample that had been left to stand for 1 day in an environment of 23°C, 50% RH, an Oken-type air permeability resistance tester (Model EG01 by Asahi Seiko Co., Ltd.) was used to measure the air permeability resistance R (sec/100 ml). The value per 10 g/$m^2$ basis weight was calculated by the following formula.

$$\text{Air permeability resistance (sec/100 ml) per 10 g/m}^2\text{ basis weight} = R/W \times 10$$

[Weight-average molecular weight (Mw), number-average molecular weight (Mn) and Mw/Mn ratio]

After weighing out 0.88 g of the porous sheet and chopping it into small pieces with scissors, the pieces were gently stirred and allowed to stand for one day after addition of 20 mL of purified water. The water and solid portion were then separated by centrifugation. After then adding 20 mL of acetone, the mixture was gently stirred and allowed to stand for 1 day. The acetone and solid portion were separated by centrifugation. After then adding 20 mL of N,N-dimethylacetamide, the mixture was gently stirred and allowed to stand for 1 day. Centrifugal separation was again carried out to separate the N,N-dimethylacetamide and solid content, and then 20 mL of N,N-dimethylacetamide was added and the mixture was gently stirred and allowed to stand for 1 day. The N,N-dimethylacetamide and solid content were separated by centrifugation, 19.2 g of a N,N-dimethylacetamide solution prepared to a lithium chloride content of 8 mass% was added to the solid portion, and the mixture was stirred with a stirrer while visually confirming dissolution. The cellulose nanofiber-dissolved solution was filtered with a 0.45 μm filter, and the filtrate was supplied as a sample for gel permeation chromatography. The apparatus and measuring conditions used were as follows.

Apparatus: Tosoh Corp. HLC-8120
Column: TSKgel SuperAWM-H (6.0 mm I.D. × 15 cm) × 2
Detector: RI detector
Eluent: N,N-dimethylacetamide (lithium chloride: 0.2%)
Flow rate: 0.6 mL/min
Calibration curve: Based on pullulan

For acetylated cellulose nanofibers, the weight-average molecular weight (Mw), number-average molecular weight (Mn) and Mw/Mn ratio used were for the starting material before acetylation.

[Alkali-soluble polysaccharide average content]

The alkali-soluble polysaccharide content was determined by a method described in non-patent literature for cellulose nanofibers (Mokushitsu Kagaku Jikken Manual, ed. The Japan Wood Research Society, pp.92-97, 2000), subtracting the α-cellulose content from the holocellulose content (Wise method). The alkali-soluble polysaccharide content was calculated 3 times for each sample, and the number average for the calculated alkali-soluble polysaccharide contents was recorded as the average alkali-soluble polysaccharide content of the cellulose nanofibers. For acetylated cellulose nanofibers, the average alkali-soluble polysaccharide content used was for the starting material before acetylation.

[Degree of crystallinity]

The porous sheet was measured by X-ray diffraction and the degree of crystallinity was calculated by the following formula.

$$\text{Degree of crystallinity (\%)} = [I_{(200)} - I_{(amorphous)}]/I_{(200)} \times 100$$

$I_{(200)}$: Diffraction peak intensity at 200 plane (2θ = 22.5°) for type I cellulose crystal
$I_{(amorphous)}$: Amorphous halo peak intensity for type I cellulose crystal, peak intensity at angle of 4.5° lower than diffraction angle at 200 plane (2θ = 18.0°).

(X-ray diffraction measuring conditions)

Apparatus: MiniFlex (Rigaku Corp.)
Operating shaft: 2θ/θ
Source: CuKα
Measuring method: Continuous
Voltage: 40 kV
Current: 15 mA
Initial angle: 2θ = 5°
Final angle: 2θ = 30°
Sampling width: 0.020°
Scan speed: 2.0°/min
Sample: Porous sheet attached to specimen holder.

[Number-average fiber diameter]

The concentrated cake was diluted with tert-butanol to 0.01 mass% and dispersed using a high-shear homogenizer ("ULTRA-TURRAX T18", trade name of IKA Corp.) with treatment conditions of 15,000 rpm × 3 min, cast onto an osmium-vapor deposited silicon substrate and air-dried, and then measured with a high-resolution scanning electron microscope (Regulus 8220 by Hitachi High-Technologies Corp.). The measurement was carried out with adjustment of the magnification so that at least 100 cellulose fibers were observable, the short diameters (D) of 100 randomly selected cellulose fibers were determined, and the addition average for the 100 cellulose fibers was calculated.

[Specific surface area]

The BET specific surface area ($m^2/g$) was calculated with the program of a specific surface area/pore distribution measuring apparatus (Nova-4200e, by Quantachrome Instruments), after drying approximately 0.2 g of the porous sheet for 5 hours in a vacuum at 120°C and measuring the nitrogen gas adsorption at the boiling point of liquid nitrogen at five points (multipoint method) in a relative vapor pressure ($P/P_0$) range of 0.05 to 0.2.

[Degree of acyl substitution (DS)]

The infrared spectrum of the porous sheet was measured at 5 locations by ATR-IR, using a Fourier transform infrared spectrometer (FT/IR-6200 by Jasco Corp.). The infrared spectrum was measured under the following conditions.

Number of scans: 64,
Wavenumber resolution: 4 $cm^{-1}$,
Wavenumber range: 4000 to 600 $cm^{-1}$,
ATR crystal: diamond,
Incident angle: 45°

The IR index was calculated from the obtained IR spectrum using the following formula:

$$\text{IR index} = \text{H1730/H1030.}$$

In the formula, H1730 and H1030 are the absorbances at 1730 $cm^{-1}$ and 1030 $cm^{-1}$ (absorption bands for C-O stretching vibration of the cellulose backbone chain). The respective baselines used were a line connecting 1900 $cm^{-1}$ and 1500 $cm^{-1}$ and a line connecting 800 $cm^{-1}$ and 1500 $cm^{-1}$, each baseline being defined as the absorbance at absorbance = 0.

The average degree of substitution at each measured location was calculated from the IR index using the following formula, and the average value was recorded as DS.

$$\text{DS} = 4.13 \times \text{IR Index}$$

[DS Heterogeneity ratio (CV)]

The porous sheet after ATR-IR measurement was frozen and crushed to prepare a cellulose powder sample. The powder was placed on ten 2.5 mmφ dish-shaped sample stands and each surface was pressed flat, measuring each by XPS. The obtained C1s spectrum was analyzed by peak separation, and the DSs of each sample was determined by the following formula using the area intensity (Ixf) of the peak (286 eV) attributed to the acetyl group O-C=O bond with respect to the area intensity (Ixp) of the peak attributed to the C2-C6 carbons of the pyranose rings of cellulose (289 eV, C-C bond), and the average was recorded as the DSs for the cellulose fibers.

$$\mathrm{DSs} = (\mathrm{Ixf}) \times 5/(\mathrm{Ixp})$$

The conditions used for XPS measurement were the following.

Device: VersaProbe II by Ulvac-Phi, Inc.
Excitation source: mono. AlKα 15 kV × 3.33 mA
Analysis size: ~200 μmφ
Photoelectron take-off angle: 45°
Capture range
Narrow scan: C 1s, O 1s
Pass energy: 23.5 eV

Based on the DS and DSs, the DS heterogeneity ratio (CV) was calculated using the following formula.

$$\text{DS heterogeneity ratio (CV)} = \mathrm{DSs}/\mathrm{DS}$$

[Thermal decomposition initiation temperature ($T_D$)]

Thermal analysis of the porous sheet was conducted by the following method.

Apparatus: Thermo plus EVO2 by Rigaku
Sample: Circular pieces cut out from the porous sheet were placed and stacked in an aluminum sample pan, in an amount of 10 mg.
Sample weight: 10 mg
Measuring conditions: Temperature increase from room temperature to 150°C at a temperature-elevating rate of 10°C/min, in a nitrogen flow of 100 ml/min, and holding at 150°C for 1 hour, followed by temperature increase to 450°C at 10°C/min.
$T_D$ calculation method: Calculation was from a graph with temperature on the abscissa and weight retention% on the ordinate. Starting from the weight of the porous sheet at 150°C (with essentially all of the moisture content removed) (a weight reduction of 0 wt%) and increasing the temperature, a straight line was obtained running through the temperature at 1 wt% weight reduction and the temperature at 2 wt% weight reduction. The temperature at the point of intersection between this straight line and a horizontal (baseline) running through the origin at weight reduction 0 wt%, was recorded as the thermal decomposition initiation temperature ($T_D$).

[1 wt% weight reduction temperature]

The temperature at 1 wt% weight reduction used for $T_D$ calculation was recorded as the 1 wt% weight reduction temperature.

[250°C weight change rate]

Apparatus: Thermo plus EVO2 by Rigaku
Sample: Circular pieces cut out from the porous sheet were placed and stacked in an aluminum sample pan, in an amount of 10 mg.
Sample weight: 10 mg

Measuring conditions: Temperature increase from room temperature to 150°C at a temperature-elevating rate of 10°C/min, in a nitrogen flow of 100 ml/min, and holding at 150°C for 1 hour, followed by temperature increase from 150°C to 250°C at 10°C/min and holding at 250°C for 2 hours. Calculation was by the following formula using the weight WO upon reaching 250°C and the weight W1 after holding at 250°C for 2 hours.

$$250°C\ \text{Weight change rate (\%)}: (W1 - W0)/W0 \times 100$$

<Thermoplastic resin>

[Melt viscosity at melting point + 20°C]

Using a twin-capillary rheometer (Model RH7 by Malvern), the resin viscosity of each resin was measured at the melting point + 20°C, with a shear rate of 500/s.

<Liquid polymer>

[Molecular weight]

Table 2 shows the values listed in the product catalog provided by the supplier.

[Viscosity at 25°C]

The viscosity of the liquid polymer was measured using a Brookfield viscometer (Model DVNext by Eko Instruments) at 10 rpm.

[Viscosity at 50°C]

The jacket temperature of the Brookfield viscometer was adjusted to 50°C, and measurement was carried out at 10 rpm.

[Viscosity at melting point of thermoplastic resin + 20°C]

The jacket temperature of the Brookfield viscometer was adjusted to the melting point of each resin + 20°C, and measurement was carried out at 10 rpm.

[Vinyl and aromatic styrene contents]

Table 2 shows the values listed in the product catalog provided by the supplier.

[Glass transition temperature]

Measurement was by the method described in JIS K6240.

[Thermal decomposition initiation temperature]

A 10 mg portion of liquid polymer was placed in an aluminum sample pan and measurement was conducted in the same manner as for the cellulose nanofibers.

<Resin composition>

[Confirming presence of liquid polymer between cellulose nanofibers and resin]

A scanning transmission electron microscope (STEM) was used for evaluation under the following conditions.
Resin composition pellets were trimmed to an appropriate size, and a cryomicrotome was used with the thickness set to 100 nm, to prepare an ultrathin section as an MD-ND cross-section. After loading onto a copper mesh, it was stained as appropriate by electron staining such as ruthenium staining, osmium staining or phosphotungstic acid staining, to obtain a mirror inspection sample. The STEM observation conditions were as follows.

Apparatus: S-5500 (Hitachi, Ltd.)
Acceleration voltage: 30.0 kV
Detector: BF-STEM (transmission image)

In the obtained transmission image, portions with fiber shapes were considered to be cellulose nanofibers, and it was observed whether liquid polymer was present at the interface between the cellulose nanofibers and resin. Ten images were taken at a magnification of 50,000x in an arbitrary visual field, making an evaluation of "present" if liquid polymer was present at the interfaces in all of the images, or "absent" if no liquid polymer was observed at the interfaces in some or all of the images.

[250°C weight loss of resin composition]

Measurement was performed in the same manner as for the cellulose nanofibers.

[Tensile yield strength and tensile breaking elongation]

The tensile yield strength and tensile breaking elongation were measured according to ISO527-1. The maximum strength was used instead for molded pieces that tore before reaching the yield point.

[Flexural modulus]

An injection molding machine was used for molding of a multipurpose test piece conforming to ISO294-3 from the obtained pellets under conditions conforming to JIS K6920-2. The injection molding temperature was 260°C for polyamide 6, 280°C for polyamide 66, 200°C for polypropylene and 210°C for polyacetal. The flexural modulus was measured according to ISO179. Since polyamide resins undergo changes due to moisture absorption, these were stored in an aluminum moisture-proof bag immediately after casting to minimize moisture absorption.

[Arithmetic mean surface roughness Ra]

Measurement was performed according to JISB0031 with a laser microscope (OPTELICS by Lasertec Corp.), using a multipurpose test piece conforming to ISO294-3 as the sample. The roughness curve was measured at the center of the sample and a reference length (a) was extracted in the direction of the mean line of the roughness curve, using the direction of the mean line at the extraction portion as the X-axis and the direction of vertical magnification as the Y-axis, and the arithmetic mean surface roughness Ra was obtained as the value represented by the following formula:

[Mathematical Formula 1]

$$\mathrm{Ra} = \frac{1}{a}\int_0^a \{f(x)\}\,dx$$

from the roughness curve represented as y = f(x). The obtained value was evaluated on the following scale.

A: Arithmetic mean surface roughness Ra of ≤0.5 μm
B: Arithmetic mean surface roughness Ra of >0.5 μm

<Materials>

<Cellulose nanofibers>

CNF-A: Acetylated cellulose nanofibers

After adding 5 parts by mass of the CNF-D concentrated cake described below (solid content: 20 mass%) and 95 parts by mass of DMSO into a KAPPA VITA$^R$ homomixer by Netzsch Vakumix (35 L tank size), they were dispersed in the homomixer at 2500 rpm (peripheral speed of 12 m/s) to obtain 100 parts by mass of a DMSO slurry (solid content: 1.0 mass%). Next, 2 parts by mass of vinyl acetate and 0.3 parts by mass of potassium carbonate were added and the mixture was stirred for 3 hours at 40°C. The reaction was halted by adding 100 parts by mass of water while stirring. The solid content was then filtered out by filtration. A washing procedure of adding 100 parts by mass of water to the

obtained solid, dispersing it with a homomixer and filtering was carried out 6 times to obtain 5 parts by mass of a CNF-A concentrated cake (solid content: 20 mass%).

CNF-B: Unmodified cellulose nanofibers defibrated with disc refiner

After immersing 3 parts by mass of cotton linter pulp in 27 parts by mass of water, the mixture was dispersed with a pulper. Next, 170 parts by mass of water was added to 30 parts by mass of the pulper-processed cotton linter pulp slurry (of which 3 parts by mass was cotton linter pulp), dispersing the latter in the water (1.5 mass% solid content), and a Model SDR14 Lab Refiner (pressurized DISK type) by Aikawa Iron Works Co. was used as a disc refiner apparatus for beating treatment of the aqueous dispersion for 30 minutes with a disc clearance of 1 mm, to obtain a slurry (solid concentration: 1.5 mass%). The mixture was then concentrated to a solid content of 20 mass% using a dehydrator, to obtain 15 parts by mass of a CNF-B concentrated cake.

CNF-C: Commercially available cellulose nanofibers

Commercially available CELISH KY100G (Daicel Fine Chemicals) was used as a CNF-C cake.

CNF-D: Unmodified cellulose nanofibers defibrated with a disc refiner and high-pressure homogenizer

After immersing 3 parts by mass of cotton linter pulp in 27 parts by mass of water, the mixture was dispersed with a pulper. Next, 170 parts by mass of water was added to 30 parts by mass of the pulper-processed cotton linter pulp slurry (of which 3 parts by mass was cotton linter pulp), dispersing the latter in the water (1.5 mass% solid content), and a Model SDR14 Lab Refiner (pressurized DISK type) by Aikawa Iron Works Co. was used as a disc refiner apparatus for beating treatment of the aqueous dispersion for 30 minutes with a disc clearance of 1 mm. This was followed by thorough beating under conditions with clearance reduced to a level of near zero, to obtain a beaten aqueous dispersion (solid concentration: 1.5 mass%). The obtained beaten aqueous dispersion was directly subjected to micronization treatment 10 times using a high-pressure homogenizer (NSO15H by Niro Soavi) at an operating pressure of 100 MPa, to obtain a slurry (solid concentration: 1.5 mass%). The mixture was then concentrated to a solid content of 20 mass% using a dehydrator, to obtain 15 parts by mass of a CNF-D concentrated cake.

The properties of the cellulose nanofibers are shown in Table 1.

[Table 1]

Table 1

| | Mw | Mw/Mn | Average alkali-soluble polysaccharide content (mass%) | Degree of crystallinity (%) | Number-average fiber diameter (nm) | Specific surface area ($m^2/g$) | Degree of acyl substitution DS | DS heterogeneity ratio CV (%) | Thermal decomposition initiation temperature $T_D$ (°C) | 1% weight reduction temperature (°C) | 250°C weight change rate (%) |
|---|---|---|---|---|---|---|---|---|---|---|---|
| CNF-A | 380,000 | 4.7 | 3.6 | 77 | 67 | 40 | 1.0 | 19 | 290 | 309 | -1.6 |
| CNF-B | 340,000 | 3.2 | 3.8 | 85 | 28 | 95 | 0.0 | - | 270 | - | - |
| CNF-C | 240,000 | 8.6 | 10.0 | 82 | 53 | 50 | 0.0 | - | 225 | 243 | -16.5 |
| CNF-D | 790,000 | 4.5 | 3.7 | 85 | 27 | 100 | 0.0 | - | 270 | - | - |

<Resins>

Polyamide 6 (UBE NYLON 1013B by Ube Industries, Ltd.), melting point: 225°C, ηr: 200 Pa·s
Polyamide 66 (LEONA1300 by Asahi Kasei Corp.), melting point: 265°C, ηr: 200 Pa·s
Polypropylene (J106G by Prime Polymer Co., Ltd.), melting point: 160°C, ηr: 1000 Pa·s
Polyacetal (TENAC HC450 by Asahi Kasei Corp.), melting point: 165°C, ηr: 20,000 Pa·s

<Liquid polymer and dispersion aid>

The components listed in Table 2 were used.

[Table 2]

Table 2

| | Type | Description | Molecular weight | Viscosity at 25°C (mPa.s) | η50 (mPa.s) | ηTm (mPa·s) | | | | Glass transition temperature (°C) | Thermal decomposition initiation temperature (°C) | Supplier and product number |
|---|---|---|---|---|---|---|---|---|---|---|---|---|
| | | | | | | Melting point of polypropylene + 20°C (180°C) | Melting point of polyacetal + 20°C (185°C) | Melting point of polyamide 6 + 20°C (245°C) | Melting point of polyamide 66 + 20°C (285°C) | | | |
| Liquid polymer 1 | Butadiene-styrene random copolymer | 1,2-vinyl content: 70 mol%, Styrene content: 25 mol% | 4,500 (Mn) | 150,000 | 52,000 | 59 | 54 | 13 | 5.0 | ≤0°C | 350 | Ricon 100, Cray Valley Co. |
| Liquid polymer 2 | Butadiene-styrene random copolymer | 1,2-vinyl content: 30 mol%, Styrene content: 28 mol% | 3,200 (Mn) | 17,500 | 3,500 | 71 | 67 | 25 | 13 | ≤0°C | 350 | Ricon 181, Cray Valley Co. |
| Liquid polymer 3 | Maleic acid-modified polybutadiene | Maleic acid/chain: 2 Acid anhydride equivalents: 1238 Acid value: 46 mgKOH/g | 2,700 (Mn) | 6,500 | 1,000 | 100 | 90 | 15 | 12 | ≤-50°C | 340 | Ricon 130 MA8, Cray Valley Co. |
| Liquid polymer 4 | Polybutadiene | 1,2-vinyl content: 28 mol% Vinyl groups/chain: 14 | 2,500 (Mn) | 750 | 330 | 20 | 18 | 6.6 | 4.4 | ≤-50°C | 345 | Ricon 130, Cray Valley Co. |
| Liquid polymer 5 | Polybutadiene | 1,2-vinyl content: 70 mol% Vinyl groups/chain: 18 | 1,400 (Mn) | 1,600 | 700 | 11 | 11 | 4.1 | 2.0 | ≤-50°C | 345 | Ricon 156, Cray Valley Co. |

(continued)

| | Type | Description | Molecular weight | Viscosity at 25°C (mPa.s) | η50 (mPa.s) | ηTm (mPa·s) | | | | Glass transition temperature (°C) | Thermal decomposition initiation temperature (°C) | Supplier and product number |
|---|---|---|---|---|---|---|---|---|---|---|---|---|
| | | | | | | Melting point of polypropylene + 20°C (180°C) | Melting point of polyacetal + 20°C (185°C) | Melting point of polyamide 6 + 20°C (245°C) | Melting point of polyamide 66 + 20°C (285°C) | | | |
| Liquid polymer 6 | Terminal hydroxyl-modified hydrogenated polybutadiene | OH groups/ chain: 1.95 | 2,000 | 30,000 | 4,000 | 22 | 20 | 5.1 | 2.0 | ≤-50°C | 335 | Krasol HLBH-P2000, Cray Valley Co. |
| Liquid polymer 7 | Polyolefin | Ethylene-propylene copolymer | 2,600 | 1,500 | 500 | 15 | 13 | 5.6 | 3.2 | -71°C | 280 | LUCANT HC-100, Mitsui Chemicals, Inc. |
| Liquid polymer 8 | Polyolefin | Ethylene-propylene copolymer | 6,900 | 35,000 | 17,000 | 219 | 200 | 102 | 67 | -64°C | 300 | LUCANT HC-2000, Mitsui Chemicals, Inc. |
| PEG-PPG | Ethylene oxide-propylene oxide copolymer | Surfactant | 3,000 | 350 | 150 | 10 | 9.1 | 3.9 | 2.2 | - | 200 | SANNIX GL-3000, Sanyo Chemical Industries, Ltd. |
| Dispersion aid | Sorbitan fatty acid ester | - | 346 | 6,000 | 300 | - | - | - | - | - | 200 | RHEODOL SP-L10, Kao Corp. |

<Additional components

Antioxidant: Irganox 245 by BASF Corp.

<Preparation of resin compositions>

[Examples 1 to 23]

The materials were combined as shown in Tables 3 and 4 to prepare resin compositions, by the following procedure.

The cellulose cake and liquid polymer were combined as shown in Tables 3 and 4 and a planetary mixer was used for reduced pressure drying to obtain a cellulose dried body.

The cellulose dried body was mixed with the resin in the proportions listed in Tables 3 and 4 and kneaded with a twin-screw extruder to obtain cellulose-containing resin pellets as a resin composition.

[Comparative Examples 1 to 5]

Resin compositions were obtained in the same manner as Example 1, except for using PEG-PPG instead of liquid polymer 1, as shown in Table 5.

[Reference Examples 1 to 4]

Resin compositions were obtained by loading the resin alone into a twin-screw extruder, as shown in Table 5, and kneading under the same conditions as Example 1.

The evaluation results are shown in Tables 3 to 5.

[Table 3]

Table 3

| | | | Units | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| Content | Cellulose nanofibers | CNF-A | Parts by mass | 10 | | | | 10 | 10 | 10 | 10 | 10 | 10 | 10 | 10 |
| | | CNF-B | Parts by mass | | 10 | | | | | | | | | | |
| | | CNF-C | Parts by mass | | | 10 | | | | | | | | | |
| | | CNF-D | Parts by mass | | | | 10 | | | | | | | | |
| | Thermoplastic resin | Polyamide 6 | Parts by mass | 100 | 100 | 100 | 100 | 100 | 100 | 100 | 100 | 100 | 100 | 100 | 100 |
| | Liquid polymer | Liquid polymer-1 | Parts by mass | 5 | 5 | 5 | 5 | 10 | 1 | 0.1 | | | | | |
| | | Liquid polymer-2 | Parts by mass | | | | | | | | 5 | | | | |
| | | Liquid polymer-3 | Parts by mass | | | | | | | | | 5 | | | |
| | | Liquid polymer-4 | Parts by mass | | | | | | | | | | 5 | | |
| | | Liquid polymer-5 | Parts by mass | | | | | | | | | | | 5 | |
| | | Liquid polymer-6 | Parts by mass | | | | | | | | | | | | 5 |
| | Other components | Dispersion aid | Parts by mass | | | | | | | | | | | | |
| | | Antioxidant | Parts by mass | | | | | | | | | | | | |

(continued)

| | | Units | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Evaluation | Presence or absence of liquid polymer between CNF and resin | Present/absent | Present | Present | Present | Present | Present | Present | Present | Present | Present | Present | Present | Present |
| | 250°C weight loss of resin composition | % | 0.8 | 0.8 | 0.8 | 0.8 | 1.0 | 0.6 | 0.6 | 0.8 | 0.8 | 0.8 | 0.8 | 0.8 |
| | Tensile yield strength | MPa | 94 | 85 | 84 | 88 | 90 | 96 | 99 | 94 | 93 | 94 | 94 | 94 |
| | Tensile breaking elongation | % | 6 | 6 | 8 | 6 | 10 | 5 | 4 | 6 | 15 | 6 | 6 | 6 |
| | Flexural modulus | GPa | 4.5 | 4.1 | 4.0 | 4.3 | 4.3 | 4.7 | 5.0 | 4.5 | 4.3 | 4.5 | 4.5 | 4.5 |
| | Thermal decomposition initiation temperature T1 of liquid polymer | °C | 350 | 350 | 350 | 350 | 350 | 350 | 350 | 350 | 340 | 345 | 345 | 340 |
| | Thermal decomposition initiation temperature T2 of cellulose nanofibers | °C | 290 | 270 | 220 | 270 | 290 | 290 | 290 | 290 | 290 | 290 | 290 | 290 |
| | $T1 \geq T2$ | Satisfied/not satisfied | Satisfied | Satisfied | Satisfied | Satisfied | Satisfied | Satisfied | Satisfied | Satisfied | Satisfied | Satisfied | Satisfied | Satisfied |
| | $T1 > T3$ | Satisfied/not satisfied | Satisfied | Satisfied | Satisfied | Satisfied | Satisfied | Satisfied | Satisfied | Satisfied | Satisfied | Satisfied | Satisfied | Satisfied |
| | $T1 > T4$ | Satisfied/not satisfied | Satisfied | Satisfied | Satisfied | Satisfied | Satisfied | Satisfied | Satisfied | Satisfied | Satisfied | Satisfied | Satisfied | Satisfied |
| | Arithmetic mean surface roughness Ra | $\mu m$ | 0.2 | 0.2 | 0.2 | 0.2 | 0.3 | 0.2 | 0.2 | 0.2 | 0.2 | 0.2 | 0.2 | 0.2 |
| | Ra evaluation | A/B | A | A | A | A | A | A | A | A | A | A | A | A |
| | $\eta 50/\eta Tm$ | - | 4000 | 4000 | 4000 | 4000 | 4000 | 4000 | 4000 | 140 | 67 | 50 | 171 | 783 |
| | $\eta r/\eta Tm$ | - | 15,385 | 15,385 | 15,385 | 15,385 | 15,385 | 15,385 | 15,385 | 7998 | 13,333 | 30,303 | 48,780 | 39,167 |

(continued)

| | | Units | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| | $\eta r/\eta 50$ | - | 4 | 4 | 4 | 4 | 4 | 4 | 4 | 57 | 200 | 606 | 286 | 50 |
| | $\eta 50/\eta Tm \geq 80$ satisfied (for polyamide) | Satisfied/not satisfied | Satisfied | Satisfied | Satisfied | Satisfied | Satisfied | Satisfied | Satisfied | Satisfied | Not satisfied | Not satisfied | Satisfied | Satisfied |
| | $\eta r/\eta Tm \leq 50{,}000$ satisfied (for polyamide) | Satisfied/not satisfied | Satisfied | Satisfied | Satisfied | Satisfied | Satisfied | Satisfied | Satisfied | Satisfied | Satisfied | Satisfied | Satisfied | Satisfied |
| | $1 \leq \eta r/\eta 50 \leq 1000$ satisfied | Satisfied/not satisfied | Satisfied | Satisfied | Satisfied | Satisfied | Satisfied | Satisfied | Satisfied | Satisfied | Satisfied | Satisfied | Satisfied | Satisfied |

[Table 4]

Table 4

| | | | Units | Example 13 | Example 14 | Example 15 | Example 16 | Example 17 | Example 18 | Example 19 | Example 20 | Example 21 | Example 22 | Example 23 |
|---|---|---|---|---|---|---|---|---|---|---|---|---|---|---|
| Content | Cellulose nanofibers | CNF-A | Parts by mass | 10 | 10 | 10 | 1 | 30 | | | 10 | 10 | | |
| | | CNF-D | Parts by mass | | | | | | 10 | 10 | | | 10 | 10 |
| | Thermoplastic resin | Polyamide 6 | Parts by mass | | | | 100 | 100 | 100 | 100 | 100 | 100 | 100 | 100 |
| | | Polyamide 66 | Parts by mass | 100 | | | | | | | | | | |
| | | Polypropylene | Parts by mass | | 100 | | | | | | | | | |
| | | Polyacetal | Parts by mass | | | 100 | | | | | | | | |
| | Liquid polymer | Liquid polymer-1 | Parts by mass | 5 | 5 | 5 | 0.5 | 15 | | | 4.5 | 4.95 | 4.5 | 4.95 |
| | | Liquid polymer-7 | Parts by mass | | | | | | 5 | | | | | |
| | | Liquid polymer-8 | Parts by mass | | | | | | | 5 | | | | |
| | Other components | Dispersion aid | Parts by mass | | | | | | | | 0.5 | 0.05 | 0.5 | 0.05 |
| | | Antioxidant | Parts by mass | | | | | | | | | | | |
| | Presence or absence of liquid polymer between CNF and resin | | Present/absent | Present | Present | Present | Present | Present | Present | Present | Present | Present | Present | Present |
| | 250°C weight loss of resin composition | | % | 0.8 | - | - | 0.6 | 1.2 | 1.0 | 1.0 | 0.9 | 0.8 | 0.9 | 0.8 |
| | Tensile yield strength | | MPa | 94 | 50 | 77 | 80 | 110 | 92 | 90 | 98 | 96 | 96 | 92 |

(continued)

| | | Units | Example 13 | Example 14 | Example 15 | Example 16 | Example 17 | Example 18 | Example 19 | Example 20 | Example 21 | Example 22 | Example 23 |
|---|---|---|---|---|---|---|---|---|---|---|---|---|---|
| Evaluation | Tensile breaking elongation | % | 6 | 15 | 6 | 20 | 2 | 6 | 6 | 6 | 6 | 6 | 6 |
| | Flexural modulus | GPa | 4.5 | 2.9 | 4.2 | 3.0 | 6.0 | 4.5 | 4.5 | 4.8 | 4.7 | 4.6 | 4.5 |
| | Thermal decomposition initiation temperature T1 of liquid polymer | °C | 350 | 350 | 350 | 350 | 350 | 280 | 300 | 350 | 350 | 350 | 350 |
| | Thermal decomposition initiation temperature T2 of cellulose nanofibers | °C | 290 | 290 | 290 | 290 | 290 | 270 | 270 | 290 | 290 | 270 | 270 |
| | $T1 \geq T2$ | Satisfied/not satisfied | Satisfied | Satisfied | Satisfied | Satisfied | Satisfied | Satisfied | Satisfied | Satisfied | Satisfied | Satisfied | Satisfied |
| | $T1 > T3$ | Satisfied/not satisfied | Satisfied | Satisfied | Satisfied | Satisfied | Satisfied | Not satisfied | Satisfied | Satisfied | Satisfied | Satisfied | Satisfied |
| | $T1 > T4$ | Satisfied/not satisfied | Not satisfied | Satisfied | Satisfied | Satisfied | Satisfied | Not satisfied | Not satisfied | Satisfied | Satisfied | Satisfied | Satisfied |
| | Arithmetic mean surface roughness Ra | μm | 0.4 | 0.2 | 0.2 | 0.2 | 0.3 | 0.4 | 0.4 | 0.4 | 0.3 | 0.4 | 0.3 |
| | Ra evaluation | A/B | A | A | A | A | A | A | A | A | A | A | A |
| | $\eta 50/\eta Tm$ | - | 10400 | 881 | 963 | 4000 | 4000 | 89 | 167 | 4000 | 4000 | 4000 | 4000 |
| | $\eta r/\eta Tm$ | - | 40,000 | 16,949 | 37,037 | 15,385 | 15,385 | 35,714 | 1961 | 15,385 | 15,385 | 15,385 | 15,385 |
| | $\eta r/\eta 50$ | - | 4 | 19 | 38 | 4 | 4 | 400 | 12 | 4 | 4 | 4 | 4 |
| | $\eta 50/\eta Tm \geq 20$ (for other than polyamide) or $\eta 50/\eta Tm \geq 80$ (for polyamide) satisfied | Satisfied/not satisfied | Satisfied | Satisfied | Satisfied | Satisfied | Satisfied | Satisfied | Satisfied | Satisfied | Satisfied | Satisfied | Satisfied |
| | $\eta r/\eta Tm \leq 50,000$ (for other than polyacetal) or $\eta r/\eta Tm \leq 100,000$ (for polyacetal) satisfied | Satisfied/not satisfied | Satisfied | Satisfied | Satisfied | Satisfied | Satisfied | Satisfied | Satisfied | Satisfied | Satisfied | Satisfied | Satisfied |
| | $1 \leq \eta r/\eta 50 \leq 1000$ satisfied | Satisfied/not satisfied | Satisfied | Satisfied | Satisfied | Satisfied | Satisfied | Satisfied | Satisfied | Satisfied | Satisfied | Satisfied | Satisfied |

[Table 5]

Table 5

| | | | Units | Comp. Ex-ample 1 | Comp.. Ex-ample 2 | Comp. Ex-ample 3 | Comp. Ex-ample 4 | Comp. Ex-ample 5 | Ref. Exam-ple 1 | Ref. Exam-ple 2 | Ref. Exam-ple 3 | Ref. Exam-ple 4 |
|---|---|---|---|---|---|---|---|---|---|---|---|---|
| Content | Cellulose nanofibers | CNF-A | Parts by mass | 10 | 10 | 10 | 10 | 10 | | | | |
| | Thermoplastic resin | Polyamide 6 | Parts by mass | 100 | 100 | | | | 100 | | | |
| | | Polyamide 66 | Parts by mass | | | 100 | | | | 100 | | |
| | | Polypropylene | Parts by mass | | | | 100 | | | | 100 | |
| | | Polyacetal | Parts by mass | | | | | 100 | | | | 100 |
| | Liquid polymer | PEG-PPG | Parts by mass | 5 | 5 | 5 | 5 | 5 | | | | |
| | Other components | Antioxidant | Parts by mass | | 0.1 | | | | | | | |
| | Presence or absence of liquid polymer between CNF and resin | | Present/ absent | Absent | Absent | Absent | Absent | Absent | - | - | - | - |
| | 250°C weight loss of resin composition | | % | 1.7 | 1.6 | 1.7 | - | - | 0.5 | 0.5 | - | - |
| | Tensile yield strength | | MPa | 95 | 95 | 95 | 45 | 75 | 75 | 75 | 35 | 65 |
| | Tensile breaking elongation | | % | 4 | 4 | 4 | 5 | 4 | 50 | 50 | 200 | 30 |
| | Flexural modulus | | GPa | 4.5 | 4.5 | 4.5 | 2.7 | 4.0 | 2.7 | 2.7 | 1.5 | 2.7 |
| | Thermal decomposition initiation temperature T1 of liquid polymer | | °C | 200 | 200 | 200 | 200 | 200 | - | - | - | - |
| | Thermal decomposition initiation temperature T2 of cellulose nanofibers | | °C | 290 | 290 | 290 | 290 | 290 | - | - | - | - |
| | T1≥T2 | | Satisfied/not satisfied | Not satisfied | Not satisfied | Not satisfied | Not satisfied | Not satisfied | - | - | - | - |
| | T1>T3 | | Satisfied/not satisfied | Not satisfied | Not satisfied | Not satisfied | Not satisfied | Not satisfied | - | - | - | - |

(continued)

| | | Units | Comp. Ex-ample 1 | Comp.. Ex-ample 2 | Comp. Ex-ample 3 | Comp. Ex-ample 4 | Comp. Ex-ample 5 | Ref. Exam-ple 1 | Ref. Exam-ple 2 | Ref. Exam-ple 3 | Ref. Exam-ple 4 |
|---|---|---|---|---|---|---|---|---|---|---|---|
| Evaluation | T1>T4 | Satisfied/not satisfied | Not satisfied | Not satisfied | Not satisfied | Not satisfied | Not satisfied | - | - | - | - |
| | Arithmetic mean surface roughness Ra | μm | 0.9 | 0.8 | 1.0 | 0.7 | 0.9 | 0.2 | 0.2 | 0.2 | 0.2 |
| | Ra evaluation | A/B | B | B | B | B | B | A | A | A | A |
| | $\eta 50/\eta Tm$ | - | 38 | 38 | 68 | 15 | 16 | - | - | - | - |
| | $\eta r/\eta Tm$ | - | 51,282 | 51,282 | 90,909 | 100,000 | 219,780 | - | - | - | - |
| | $\eta r/\eta 50$ | - | 1333 | 1333 | 1333 | 6667 | 13,333 | - | - | - | - |
| | $\eta 50/\eta Tm \geq 20$ (for other than polyamide) or $\eta 50/\eta Tm \geq 80$ (for polyamide) satisfied | Satisfied/not satisfied | Not satisfied | Not satisfied | Not satisfied | Not satisfied | Not satisfied | - | - | - | - |
| | $\eta r/\eta Tm \leq 50,000$ (for other than polyacetal) or $\eta r/\eta Tm \leq 100,000$ (for polyacetal) satisfied | Satisfied/not satisfied | Not satisfied | Not satisfied | Not satisfied | Not satisfied | Not satisfied | - | - | - | - |
| | $1 \leq \eta r/\eta 50 \leq 1000$ satisfied | Satisfied/not satisfied | Not satisfied | Not satisfied | Not satisfied | Not satisfied | Not satisfied | - | - | - | - |

INDUSTRIAL APPLICABILITY

The resin composition of the invention can be suitably used for various types of molded resins.

## Claims

1. A resin composition comprising cellulose nanofibers, a resin, and a liquid polymer having a thermal decomposition initiation temperature of higher than 200°C.

2. The resin composition according to claim 1, wherein the liquid polymer is liquid rubber.

3. The resin composition according to claim 1, wherein the liquid polymer includes a diene rubber.

4. The resin composition according to claim 1, wherein the liquid polymer is one or more selected from the group consisting of polybutadiene, butadiene-styrene copolymer, polyisoprene and polychloroprene.

5. The resin composition according to claim 1, wherein a number-average molecular weight of the liquid polymer is 1,000 to 80,000.

6. The resin composition according to claim 1, wherein a viscosity of the liquid polymer at 25°C is 100 mPa·s to 1,000,000 mPa·s.

7. The resin composition according to claim 1, wherein the liquid polymer is a copolymer of a conjugated diene monomer and an aromatic vinyl monomer, and an amount of aromatic vinyl monomer bonded to the conjugated diene monomer is 5 mol% to 70 mol%.

8. The resin composition according to claim 1, wherein a glass transition temperature of the liquid polymer is -150°C to 25°C.

9. The resin composition according to claim 1, wherein the cellulose nanofibers are chemically modified cellulose nanofibers.

10. The resin composition according to claim 9, wherein the chemically modified cellulose nanofibers are acylated cellulose nanofibers with a degree of acyl substitution of 0.1 to 2.0.

11. The resin composition according to claim 1, wherein a number-average fiber diameter of the cellulose nanofibers is 2 nm to 1000 nm.

12. The resin composition according to claim 1, wherein a thermal decomposition initiation temperature of the cellulose nanofibers is 250°C or higher.

13. The resin composition according to claim 1, wherein the liquid polymer is present in a form infiltrating at least a portion of the interface between the cellulose nanofibers and the resin.

14. The resin composition according to claim 1, wherein a 250°C weight loss of the resin composition is 1.5% or lower.

15. The resin composition according to claim 1, which satisfies the relationship:

$$(T1) \geq (T2)$$

for the thermal decomposition initiation temperature T1 of the liquid polymer and the thermal decomposition initiation temperature T2 of the cellulose nanofibers.

16. The resin composition according to claim 15, wherein the difference between T1 and T2 (T1 - T2) is 5°C or more.

17. The resin composition according to claim 1, wherein the resin is a thermoplastic resin.

**18.** The resin composition according to claim 17, wherein the thermoplastic resin is one or more selected from the group consisting of polyamide-based resins, polyolefin-based resins and polyacetal-based resins.

**19.** The resin composition according to claim 17, which satisfies the relationship:

$$(T1) > (T3)$$

for the thermal decomposition initiation temperature T1 of the liquid polymer and temperature T3 which is either the melting point of the thermoplastic resin or the glass transition temperature + 70°C thereof.

**20.** The resin composition according to claim 19, wherein the thermoplastic resin is a crystalline thermoplastic resin, and temperature T3 is the melting point of the thermoplastic resin.

**21.** The resin composition according to claim 17, which satisfies the relationship:

$$(T1) > (T4)$$

for the thermal decomposition initiation temperature T1 of the liquid polymer and temperature T4 which is either the melting point of the thermoplastic resin or the glass transition temperature + 100°C thereof.

**22.** The resin composition according to claim 17, which satisfies the relationships:

$$\eta 50/\eta Tm \geq 20,$$

and

$$1 \leq \eta r/\eta 50 \leq 1000$$

for the viscosity $\eta 50$ of the liquid polymer at 50°C, the viscosity $\eta Tm$ of the liquid polymer at the melting point of the thermoplastic resin + 20°C, and the melt viscosity $\eta r$ of the thermoplastic resin at the melting point of the thermoplastic resin + 20°C.

**23.** The resin composition according to claim 17,

wherein the thermoplastic resin is a polyolefin-based resin, and
the resin composition satisfies the relationship:

$$\eta 50/\eta Tm \geq 20$$

for the viscosity $\eta 50$ of the liquid polymer at 50°C and the viscosity $\eta Tm$ of the liquid polymer at the melting point of the polyolefin-based resin + 20°C.

**24.** The resin composition according to claim 17,

wherein the thermoplastic resin is a polyolefin-based resin, and
the resin composition satisfies the relationship:

$$\eta r/\eta Tm \leq 50{,}000$$

for the melt viscosity $\eta r$ of the polyolefin-based resin at the melting point of the polyolefin-based resin + 20°C and the viscosity $\eta Tm$ of the liquid polymer at the melting point of the polyolefin-based resin + 20°C.

**25.** The resin composition according to claim 17,

wherein the thermoplastic resin is a polyacetal-based resin, and
the resin composition satisfies the relationship:

$$\eta 50/\eta Tm \geq 20$$

for the viscosity η50 of the liquid polymer at 50°C and the viscosity ηTm of the liquid polymer at the melting point of the polyacetal-based resin + 20°C.

**26.** The resin composition according to claim 17,

wherein the thermoplastic resin is a polyacetal-based resin, and
the resin composition satisfies the relationship:

$$\eta r/\eta Tm \leq 100{,}000$$

for the melt viscosity ηr of the polyacetal-based resin at the melting point of the polyacetal-based resin + 20°C and the viscosity ηTm of the liquid polymer at the melting point of the polyacetal-based resin + 20°C.

**27.** The resin composition according to claim 17,

wherein the thermoplastic resin is a polyamide-based resin, and
the resin composition satisfies the relationship:

$$\eta 50/\eta Tm \geq 80$$

for the viscosity η50 of the liquid polymer at 50°C and the viscosity ηTm of the liquid polymer at the melting point of the polyamide-based resin + 20°C.

**28.** The resin composition according to claim 17,

wherein the thermoplastic resin is a polyamide-based resin, and
the resin composition satisfies the relationship:

$$\eta r/\eta Tm \leq 50{,}000$$

for the melt viscosity ηr of the polyamide-based resin at the melting point of the polyamide-based resin + 20°C and the viscosity ηTm of the liquid polymer at the melting point of the polyamide-based resin + 20°C.

**29.** The resin composition according to claim 1, which does not comprise a surfactant.

**30.** The resin composition according to claim 1, which includes a dispersion aid at 0.1 to 50 parts by mass with respect to 100 parts by mass of the liquid polymer.

**31.** A method for producing a resin composition according to any one of claims 1 to 30, wherein the method includes: hot kneading a mixture comprising cellulose nanofibers, a resin and a liquid polymer.

**INTERNATIONAL SEARCH REPORT**

International application No.
**PCT/JP2022/023510**

**A. CLASSIFICATION OF SUBJECT MATTER**

***C08L 101/00***(2006.01)i; ***C08K 7/02***(2006.01)i; ***C08L 1/02***(2006.01)i; ***C08L 1/12***(2006.01)i; ***C08L 9/00***(2006.01)i; ***C08L 23/00***(2006.01)i; ***C08L 59/00***(2006.01)i; ***C08L 77/00***(2006.01)i; ***C08L 101/12***(2006.01)i
FI: C08L101/00; C08L1/02; C08L1/12; C08L9/00; C08L101/12; C08K7/02; C08L77/00; C08L59/00; C08L23/00

According to International Patent Classification (IPC) or to both national classification and IPC

**B. FIELDS SEARCHED**

Minimum documentation searched (classification system followed by classification symbols)

C08L101/00; C08K7/02; C08L1/02; C08L1/12; C08L9/00; C08L23/00; C08L59/00; C08L77/00; C08L101/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2020/202909 A1 (SEIKO PMC CORP.) 08 October 2020 (2020-10-08) claims, paragraphs [0016], [0017], [0020]-[0022], [0032], [0035], examples (particularly, paragraphs [0060], [0069], [0082]), fig. 1 | 1-24, 29-31<br>25-28 |
| A | JP 2017-25338 A (KYOTO UNIV.) 02 February 2017 (2017-02-02) claims, examples | 1-31 |
| A | JP 2020-41076 A (SUMITOMO RUBBER IND., LTD.) 19 March 2020 (2020-03-19) claims, examples | 1-31 |
| A | JP 2021-66789 A (ASAHI KASEI CORP.) 30 April 2021 (2021-04-30) claims, examples | 1-31 |
| P, X<br>P, A | JP 2022-14203 A (SEIKO PMC CORP.) 19 January 2022 (2022-01-19) claims, example 14 | 1-24, 29-31<br>25-28 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 August 2022** | **23 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/023510**

| Patent document cited in search report | Publication date (day/month/year) | Patent family member(s) | Publication date (day/month/year) |
|---|---|---|---|
| WO 2020/202909 A1 | 08 October 2020 | US 2022/0025142 A1<br>claims, paragraphs [0024]-[0026], [0029]-[0035], [0045], [0048], examples (particularly, paragraphs [0083], [0095], [0119]), fig. 1<br>CN 112334525 A | |
| JP 2017-25338 A | 02 February 2017 | US 2018/0037737 A1<br>claims, examples<br>EP 3272812 A1<br>CN 107429071 A<br>KR 10-2017-0129182 A | |
| JP 2020-41076 A | 19 March 2020 | EP 3623416 A1<br>claims, examples | |
| JP 2021-66789 A | 30 April 2021 | (Family: none) | |
| JP 2022-14203 A | 19 January 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020063408 A
- JP 7228775 A
- JP 4012283 B
- JP 60035006 A
- JP 60035007 A
- JP 60035008 A
- JP 5155930 A
- JP 3163088 A
- US 5272236 A


### Non-patent literature cited in the description


- Japanese Pharmacopeia. Hirokawa Shoten
- Mokushitsu Kagaku Jikken Manual. 2000, 92-97
- Polymer Process Engineering. Prentice-Hall, Inc, 1994, 291-294
- Mokushitsu Kagaku Jikken Manual. The Japan Wood Research Society, 2000, 92-97